# FASCICULE DE BREVET EUROPEEN

(11) **EP 4 076 922 B1**
(45) Date de publication et mention de la délivrance du brevet: **17.01.2024**
(21) Numéro de dépôt: 20824608.2
(22) Date de dépôt: 27.11.2020
(51) Int. Cl.: B29D 30/22, B29D 30/26

(54) **MACHINE DE FABRICATION AUTOMATIQUE DE BANDAGES PNEUMATIQUES À SOMMET DIT "POLARISÉ"**
MASCHINE ZUR AUTOMATISCHEN HERSTELLUNG VON LUFTREIFEN MIT EINER "DIAGONALEN" KRONE
MACHINE FOR THE AUTOMATIC MANUFACTURE OF PNEUMATIC TYRES WITH A "BIASED" CROWN

(30) Priorité: 20.12.2019 FR 1915248
(43) Date de publication de la demande: 26.10.2022
(73) Titulaire: COMPAGNIE GENERALE DES ETABLISSEMENTS MICHELIN, 63000 Clermont-Ferrand (FR)
(72) Inventeur: ROBIN, Vincent, 63040 CLERMONT-FERRAND Cedex 9 (FR)
(74) Mandataire: M.F.P. Michelin
(86) Numéro de dépôt international: PCT/FR2020/052209
(87) Numéro de publication internationale: WO 2021/123530

(56) Documents cités:
- EP-A1- 2 789 456
- EP-A2- 0 747 207
- WO-A1-2018/096511
- DE-B- 1 208 877
- US-A- 5 354 404
- US-A- 5 635 016

## Description

La présente invention concerne le domaine de la fabrication des bandages pneumatiques. Une machine de fabrication automatique de bandages pneumatiques est décrite, par exemple, dans le document WO 2018/096511 A1.

Il est connu de fabriquer des bandages pneumatiques en réunissant d'une part un premier bloc annulaire, dit « bloc carcasse », qui comprend au moins une nappe carcasse contenant des fils de renfort qui s'étendent selon des plans radiaux par rapport à l'axe central du bandage, et qui est conformé, de préférence par gonflage, de sorte à présenter une forme toroïdale, et d'autre part un second bloc annulaire, dit « bloc sommet », qui comprend une bande de roulement, ainsi que des nappes de renfort, dites « nappes sommet », qui présentent chacune des fils de renfort disposés parallèlement les uns aux autres et en oblique par rapport à la direction circonférentielle du bandage, selon un angle dit « angle de nappe ».

En superposant à la nappe carcasse deux nappes sommet qui possèdent des angles de nappe différents, et dont par conséquent les fils de renfort obliques respectifs se croisent entre eux et avec les fils de renfort de la nappe carcasse, on obtient avantageusement, en définitive, une armature qui présente des structures de renfort triangulaires. Cette armature est en outre généralement complétée par une frette comprenant des fils de renforts qui sont enroulés en continu, le cas échéant en spires jointives, sensiblement selon la direction circonférentielle du bandage.

Une telle architecture de bandage, dite « à carcasse radiale » présente de nombreux avantages, notamment en matière de tenue de route.

Ceci étant, dans un souci d'allègement des bandages visant notamment à réduire la consommation de carburant des véhicules, on perçoit aujourd'hui un regain d'intérêt pour une possible architecture simplifiée, qui avait notamment été décrite dans le brevet FR-1 413 102 déposé par la demanderesse, et que l'on appellera ici « architecture à sommet polarisé ».

Cette architecture à sommet polarisé est ainsi désignée car elle résulte d'une opération de fabrication telle que notamment décrite dans la demande susmentionnée et que, dans la présente description, on désignera par « opération de polarisation », ou en abrégé « polarisation », selon laquelle :
- on forme tout d'abord une structure stratifiée annulaire en superposant une nappe carcasse et une seconde nappe, de préférence une nappe sommet, qui chevauche une partie seulement de ladite nappe carcasse selon une zone dite « zone de recouvrement », laquelle partie de la nappe carcasse correspondant à ladite zone de recouvrement est destinée en pratique à venir se placer sous une bande de roulement pour former une partie du sommet du bandage, et ladite seconde nappe contenant des fils de renfort qui sont orientés différemment des fils de renforts contenus dans la nappe carcasse, de sorte que, dans ladite zone de recouvrement, les fils de renfort de ladite seconde nappe forment un réseau croisé avec les fils de renfort contenus dans la nappe carcasse, puis, ensuite, et seulement ensuite,
- on procède à une opération de conformation selon laquelle on provoque, par exemple par gonflage, une expansion radiale de la structure stratifiée, induisant une extension conjointe de la nappe carcasse et de la seconde nappe dans la zone de recouvrement, de telle manière que, dans ladite zone de recouvrement, les fils de renfort de la nappe carcasse interagissent avec les fils de renfort de la seconde nappe pendant la conformation pour produire, en forçant mutuellement une rotation de leurs directions longitudinales respectives, une modification de l'orientation desdits fils de renfort de chacune desdites nappes dans ladite zone de recouvrement. La nouvelle orientation des fils de renfort de chaque nappe, telle qu'elle est issue de ce processus de modification intentionnelle et contrôlée, est conservée dans le bandage fini.

Avantageusement, en choisissant judicieusement les paramètres de la conformation ainsi que l'orientation initiale des fils de renfort de la nappe carcasse et de la seconde nappe, ici préférentiellement une nappe sommet, il est possible de maîtriser la rotation de la direction des fils de renfort respectifs de chaque nappe, et ainsi d'obtenir, après conformation, l'orientation angulaire finale souhaitée pour les différents fils de renfort.

Un autre avantage est que l'interaction entre fils de renforts appartenant à deux nappes distinctes, interaction qui est due au croisement desdits fils de renfort créé par la superposition et la solidarisation des nappes, intervient, et provoque une modification d'orientation de la direction desdits fils de renfort, principalement voire exclusivement dans la zone de recouvrement, et peu, voire pas en dehors de ladite zone de recouvrement.

Ainsi, on pourra par exemple conserver une orientation radiale des fils de renfort de la nappe carcasse dans au moins une partie des flancs du bandage, hors de la zone de recouvrement.

Il résulte notamment de ce qui précède que, au sein d'un bandage possédant une architecture à sommet polarisé, on pourra avantageusement remplacer l'une des deux nappes sommet utilisées traditionnellement dans les bandages à architecture radiale par une portion polarisée de la nappe carcasse, en modifiant par polarisation, dans la portion de la nappe carcasse qui est située sous la bande de roulement, dans la zone de recouvrement, l'orientation des fils de renfort de ladite nappe carcasse, de sorte à obtenir dans ladite zone de recouvrement des fils de renfort de nappe carcasse non radiaux, qui se croisent avec les fils de renfort de l'unique nappe sommet restante, et ce tout en veillant à conserver par ailleurs, dans les flancs du bandage, sur au moins une partie desdits flancs du bandage, hors de la zone de recouvrement, un agencement radial desdits fils de renfort de la nappe carcasse. On obtiendra ainsi un bandage pneumatique allégé qui combine les avantages de l'agencement radial des renforts de flanc avec les avantages de l'agencement oblique et croisé des renforts de sommet.

Cependant, force est de constater que les machines de fabrication existantes, optimisées pour minimiser le temps de cycle nécessaire à une fabrication conformément à une architecture de carcasse radiale conventionnelle, sont inadaptées à la réalisation d'une telle architecture à sommet polarisé.

Les objets assignés à l'invention visent par conséquent à remédier aux inconvénients susmentionnés et proposer une nouvelle machine de fabrication de bandages qui permette une production performante de bandages possédant une architecture à sommet polarisé.

Les objets assignés à l'invention sont atteints au moyen d'une machine pour la fabrication automatique d'un bandage, ladite machine comprenant :
- une première zone dite « zone de confection », agencée pour réaliser un premier bloc annulaire constitutif du bandage, dit « bloc carcasse », qui comprend au moins une nappe carcasse pourvue d'un premier jeu d'éléments filaires de renfort, dit « renforts de carcasse », ladite zone de confection comprenant à cet effet un tambour de confection, qui présente un axe central de tambour et qui est monté en rotation autour dudit axe central de tambour, ainsi qu'un premier système d'amenée qui est agencé pour venir poser la nappe carcasse sur ledit tambour de confection par enroulement sur ledit tambour de confection, autour de l'axe central du tambour, de manière à ce que les renforts de carcasse présentent, par rapport à une direction circonférentielle du tambour de confection, une première orientation angulaire,
- une seconde zone dite « zone de finition », agencée pour réaliser un second bloc annulaire constitutif du bandage, dit « bloc sommet », qui comprend au moins une bande de roulement, ladite zone de finition comprenant à cet effet une virole montée en rotation autour d'un axe central de virole, ainsi qu'un second système d'amenée permettant de poser la bande de roulement par enroulement sur la virole, autour de l'axe central de virole,
- un système de conformation, agencé pour réaliser une opération de conformation qui provoque une expansion radiale du bloc carcasse présent sur le tambour de confection, afin d'obtenir un bloc carcasse conformé de forme toroïdale,
- une troisième zone dite « zone d'assemblage », agencée pour assembler le bloc sommet de manière concentrique sur le bloc carcasse conformé afin d'obtenir un bandage, ladite zone d'assemblage comprenant à cet effet un dispositif de transfert, du genre anneau de transfert, qui est agencé pour recevoir le bloc sommet en provenance de la virole de la zone de finition et pour transférer ledit bloc sommet sur et autour du bloc carcasse conformé,
- un système de polarisation qui est agencé pour amener au contact du bloc carcasse, avant l'opération de conformation, une structure annulaire dite « structure de polarisation », qui est centrée sur l'axe central du tambour et pourvue d'un second jeu d'éléments de renfort filaires, dits « renforts de polarisation », qui présentent par rapport à la direction circonférentielle du tambour une seconde orientation angulaire, qui est différente de la première orientation angulaire des renforts de carcasse, ladite structure de polarisation s'étendant de sorte à chevaucher partiellement la nappe carcasse le long de l'axe central du tambour, selon une zone dite « zone de recouvrement », si bien que lors de l'opération de conformation, les renforts de polarisation interagissent avec les renforts de carcasse afin de modifier, dans la zone de recouvrement, l'orientation angulaire desdits renforts de carcasse par rapport à la direction circonférentielle du tambour, et que l'on obtient ainsi un bloc carcasse conformé et polarisé,
- une unité de commande automatique, qui comprend au moins un programme permettant de faire exécuter automatiquement à la machine un cycle, dit « cycle de fabrication de bandage à sommet polarisé », qui comprend une étape de réalisation d'un bloc sommet dans la zone de finition, une étape de préparation d'un bloc carcasse conformé et polarisé qui comprend une sous-étape de réalisation d'un bloc carcasse dans la zone de confection puis une sous-étape de conformation et de polarisation au cours de laquelle on conforme et l'on polarise ledit bloc carcasse en provenance de la zone de confection pour obtenir un bloc carcasse conformé et polarisé, ledit cycle prévoyant que l'étape de réalisation du bloc sommet se chevauche temporellement au moins en partie avec l'étape de préparation du bloc carcasse, de sorte qu'une partie au moins de la réalisation du bloc sommet s'opère en temps masqué par rapport à la préparation du bloc carcasse, puis enfin une étape d'assemblage au cours de laquelle, dans la zone d'assemblage, le dispositif de transfert place et fixe le bloc sommet sur le bloc carcasse conformé et polarisé, de manière à obtenir un bandage.

Avantageusement, la machine selon l'invention permet de réaliser, dans un temps limité et dans un espace réduit, l'ensemble des opérations permettant de constituer un bandage possédant une architecture à sommet polarisé. Le bandage issu de la machine est de préférence un bandage à base de caoutchouc cru, prêt à être envoyé en cuisson pour y être vulcanisé.

La proximité des zones de confection, de finition, et d'assemblage limite avantageusement l'emprise au sol de la machine selon l'invention ainsi que l'amplitude des mouvements de transfert des différents blocs constitutifs du bandage, ce qui permet de réduire le temps de cycle et la consommation d'énergie de ladite machine.

De même, l'automatisation du processus de fabrication, et la réalisation simultanée des étapes de fabrication de différents éléments constitutifs du bandage, en l'espèce le bloc sommet d'une part et le bloc carcasse d'autre part, permet d'optimiser ledit temps de cycle.

Par ailleurs, l'architecture modulaire de la machine proposée permet notamment d'exploiter certains sous-ensembles mécaniques déjà connus et éprouvés, notamment en matière de réalisation du bloc carcasse et/ou de réalisation du bloc sommet, ce qui contribue à une bonne fiabilité de la machine, et simplifie l'intégration de ladite machine au sein des ateliers et sa prise en main par les opérateurs.

Enfin, la machine selon l'invention peut avantageusement présenter une grande polyvalence, dans la mesure où il est possible de configurer ladite machine de telle sorte qu'elle puisse réaliser aussi bien des bandages possédant une architecture à carcasse radiale que des bandages possédant une architecture à sommet polarisé.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective, une première variante de machine selon l'invention, au sein de laquelle le système de polarisation utilise une nappe sommet comme structure de polarisation, et achemine ladite nappe sommet vers la zone de confection au moyen d'un convoyeur, qui est superposé au convoyeur utilisé pour acheminer la nappe carcasse jusqu'au tambour, de sorte que le tambour peut recevoir successivement la nappe carcasse et la nappe sommet sans qu'il soit nécessaire de modifier la position axiale dudit tambour.
La figure 2 est une vue en perspective de la machine de la figure 1 au sein de laquelle, dans la zone de confection, on a enroulé sur le tambour, par-dessus la nappe carcasse, la nappe sommet apportée par le convoyeur, pour intégrer ladite nappe sommet au bloc carcasse.
La figure 3 illustre, selon une vue en perspective, une seconde variante de machine selon l'invention, au sein de laquelle le système de polarisation utilise, ici encore, une nappe sommet comme structure de polarisation, mais achemine cette fois ladite nappe sommet vers la zone de confection au moyen d'un distributeur auxiliaire, occupant axialement un emplacement distinct de celui occupé par le convoyeur qui est utilisé pour acheminer la nappe carcasse jusqu'au tambour.
La figure 4 illustre, selon une vue en perspective, la machine de la figure 3 dans une configuration où le distributeur auxiliaire, chargé de la nappe sommet, se présente en vis-à-vis du tambour, dans la zone de confection.
La figure 5 illustre, selon une vue en perspective, la machine des figures 3 et 4, au sein de laquelle on a enroulé sur le tambour, par-dessus la nappe carcasse, la nappe sommet issue du distributeur auxiliaire, pour intégrer ladite nappe sommet au bloc carcasse.
La figure 6 illustre, selon une vue en perspective, une troisième variante de machine selon l'invention, au sein de laquelle le système de polarisation utilise, ici encore, une nappe sommet comme structure de polarisation, mais comprend cette fois un convoyeur d'alimentation qui achemine ladite nappe sommet initialement dans la zone de finition, et qui est complété par un dispositif de répartition capable de prélever la nappe sommet sur le convoyeur d'alimentation et de rediriger ladite nappe sommet jusqu'à la zone de confection en contournant la zone d'assemblage.
La figure 7 est une vue en perspective de la machine de la figure 6, lorsque le dispositif de répartition prélève la nappe sommet sur le convoyeur d'alimentation.
La figure 8 est une vue de côté de la machine de la figure 7.
La figure 9 illustre, selon une vue en perspective, la machine des figures 6 à 8 lorsque le dispositif de répartition, portant la nappe sommet, contourne l'anneau de transfert et la zone d'assemblage pour transférer ladite nappe sommet de la zone de finition à la zone de confection.
La figure 10 est une vue en perspective de la machine des figues 6 à 9, une fois que le dispositif de répartition s'est positionné axialement dans la zone de confection, en vis-à-vis du tambour.
La figure 11 illustre, selon une vue en perspective, la machine des figures 6 à 10, au sein de laquelle on a enroulé sur le tambour, par-dessus la nappe carcasse, la nappe sommet issue du dispositif de répartition, pour intégrer ladite nappe sommet au bloc carcasse.
La figure 12 illustre, selon une vue en perspective, l'enroulement sur la virole, dans la zone de finition, d'une bande de roulement pour la constitution d'un bloc sommet.
La figure 13 illustre, selon une vue en perspective, la prise en charge, par l'anneau de transfert, du bloc sommet issu de la virole.
La figure 14 illustre, selon une vue en perspective, l'anneau de transfert tenant le bloc sommet, extrait de la virole, dans une position prédéterminée dans la zone d'assemblage, en attente du bloc carcasse.
La figure 15 illustre, selon une vue en perspective, la pose de tringles sur le bloc carcasse présent sur le tambour de confection.
La figure 16 illustre, selon une vue en perspective, le tambour réalisant l'opération de conformation du bloc carcasse, accompagnée le cas échéant d'une opération simultanée de polarisation dudit bloc carcasse.
La figure 17 illustre, selon une vue en perspective, l'anneau de transfert procédant, dans la zone d'assemblage, à l'assemblage du bloc sommet sur le bloc carcasse, tandis que ledit bloc carcasse est maintenu par le tambour en configuration conformée et, le cas échéant, polarisée.

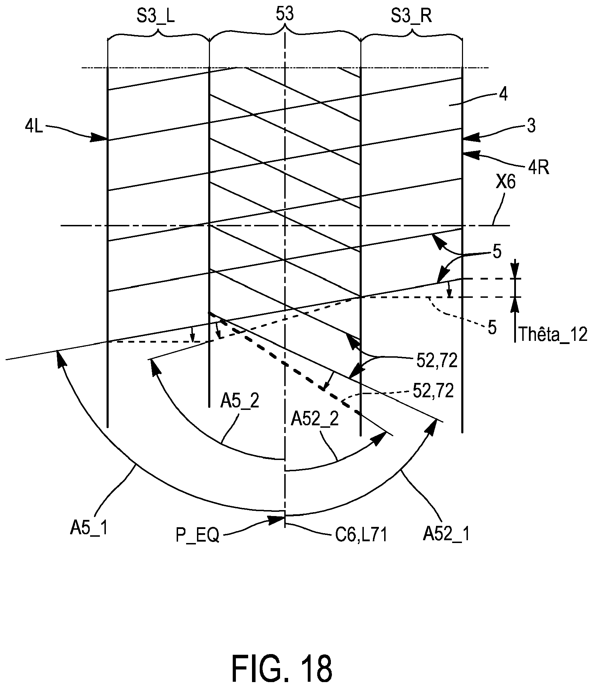

La figure 18 illustre, selon une vue schématique d'une portion de développée de bloc carcasse selon l'invention, les phénomènes de réorientation des renforts des nappes qui surviennent lors de l'opération de conformation, en faisant apparaître d'une part l'effet de la polarisation, qui résulte de la coopération entre les renforts de carcasse et les renforts de polarisation et provoque, dans la zone de recouvrement, une modification mutuelle de l'orientation des renforts de carcasse et des renforts de polarisation, et d'autre part l'effet de radialisation, c'est-à-dire l'alignement des renforts de carcasse selon des plans radiaux qui se produit en-dehors de la zone de recouvrement, dans les flancs du bandage, sous l'effet de l'expansion radiale du bloc carcasse.

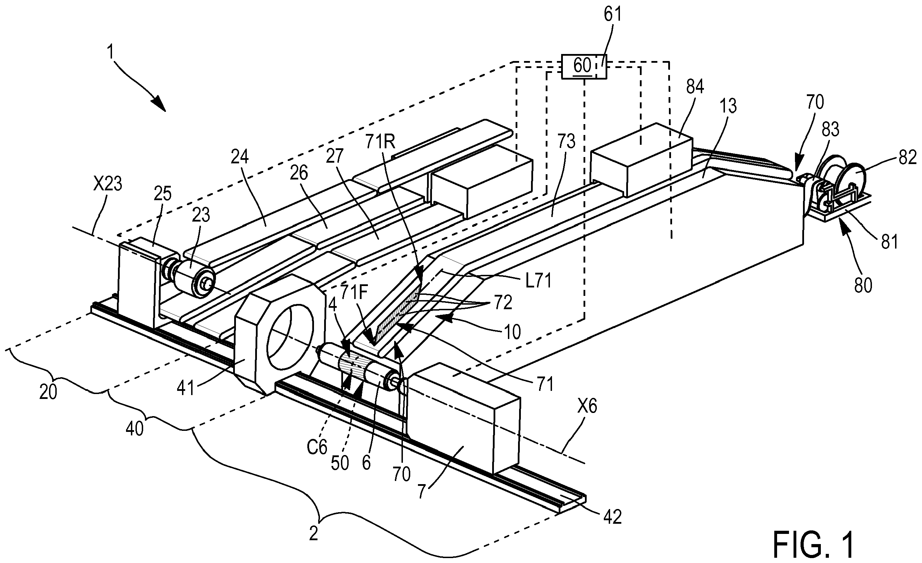

L'invention concerne une machine 1, telle qu'illustrée notamment sur les figures 1, 3 et 6, qui est destinée à la fabrication automatique d'un bandage, et plus préférentiellement à la fabrication automatique d'un bandage pneumatique.

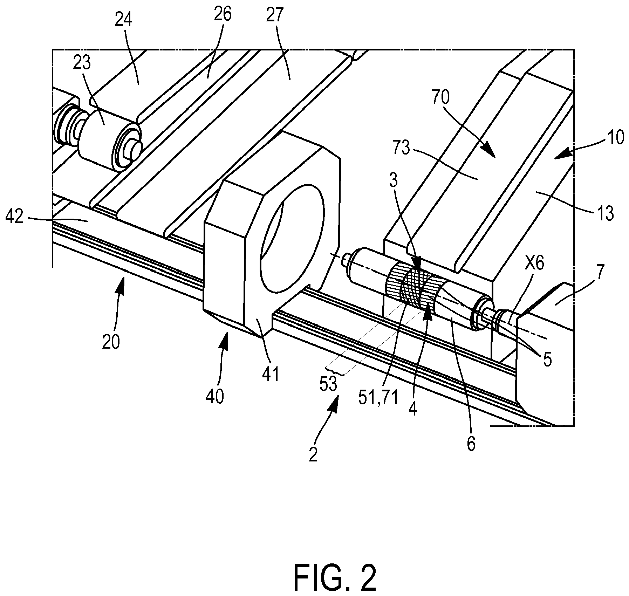

Ladite machine 1 comprend une première zone 2, dite « zone de confection » 2, agencée pour réaliser un premier bloc 3 annulaire constitutif du bandage, dit « bloc carcasse » 3, qui comprend au moins une nappe carcasse 4 pourvue d'un premier jeu d'éléments filaires de renfort 5, dit « renforts de carcasse » 5, comme cela est notamment visible sur les figures 2, 4 et 7.

Par « filaire », on entend un élément s'étendant longitudinalement selon une ligne principale et qui présente une section perpendiculaire à ladite ligne principale dont la plus grande dimension, dite « dimension transverse » G, est relativement faible par rapport à la dimension dite « dimension longitudinale » L considérée selon ladite ligne principale. Par « relativement faible », on entend que le rapport L/G est supérieur ou égal à 100, de préférence supérieur ou égal à 1000. Cette définition couvre aussi bien les éléments filaires de section circulaire que les éléments filaires de section non circulaire, par exemple de section polygonale ou oblongue. De façon préférentielle, chaque élément filaire présente une section circulaire.

La nappe carcasse 4 est de préférence formée, de manière connue en soi, à partir d'une nappe en matériau élastomérique, de préférence à base de caoutchouc cru, c'est-à-dire de caoutchouc non vulcanisé, dans laquelle sont noyés les renforts de carcasse 5.

De préférence, lesdits renforts de carcasse 5 s'étendent en longueur de façon parallèle les uns aux autres et chacun continûment depuis un bord latéral de ladite nappe carcasse 4 jusqu'au bord latéral opposé.

Les renforts de carcasse 5 présentent une raideur, c'est-à-dire un module de résistance en traction, qui est strictement supérieur au module de traction du caoutchouc cru constitutif de la nappe, et plus globalement supérieur au module de traction du caoutchouc vulcanisé, de sorte à conférer à la nappe carcasse 4 un caractère quasi-inextensible dans le sens de la longueur desdits renforts de carcasse 5.

En l'espèce, les renforts de carcasse 5 pourront être formés par des fils ou des câbles en tout matériau approprié, de préférence en matériau textile ou en matériau métallique.

Pour permettre la réalisation du bloc carcasse 3, la zone de confection 2 comprend un tambour 6 de confection, qui présente un axe central de tambour X6 et qui est monté en rotation autour dudit axe central de tambour X6.

Ledit tambour 6 est ainsi porté par, et monté en rotation sur, un bâti de tambour 7, de préférence en porte-à-faux par rapport audit bâti de tambour 7. Ledit bâti de tambour 7 comprend de préférence un moteur d'entraînement, préférentiellement électrique, permettant d'entraîner le tambour 6 en rotation autour de son axe central X6.

De préférence, le tambour 6 de confection présente, au moins initialement lors de la pose de la nappe carcasse 4, une surface de réception, de préférence cylindrique de base circulaire, qui forme une surface de révolution autour de l'axe central X6 de tambour, et qui est destinée à recevoir les composants du bloc carcasse 3.

La zone de confection 2 comprend également un premier système d'amenée 10 qui est agencé pour venir poser une nappe carcasse 4 sur le tambour de confection 6 par enroulement sur ledit tambour de confection 6, autour de l'axe central du tambour X6, et ce de manière à ce que les renforts de carcasse 5 présentent, par rapport à une direction circonférentielle C6 du tambour, une première orientation angulaire A5_1.

Le premier système d'amenée 10 pourra notamment comprendre un tapis de convoyage 13, qui s'étend transversalement à l'axe central du tambour X6 et qui débouche en vis-à-vis dudit tambour 6.

En pratique, l'axe central de tambour X6 coïncide avec l'axe central du bloc carcasse 3, qui correspond lui-même au futur axe de rotation de la roue qui accueillera le bandage réalisé à partir dudit bloc carcasse 3. On pourra donc, par commodité de description, assimiler ces différents axes les uns aux autres.

Par « direction circonférentielle », ici plus précisément par « direction circonférentielle C6 du tambour », on entend la direction qui, au point considéré, est sensiblement perpendiculaire à la fois à la direction axiale de référence considérée, c'est-à-dire ici perpendiculaire à la direction de l'axe central du tambour X6, et perpendiculaire à un rayon tiré perpendiculairement depuis ledit axe de référence jusqu'au point considéré, ici donc un rayon du tambour 6, ou le cas échéant un rayon du bloc carcasse 3.

Ainsi, la direction circonférentielle C6 du tambour correspond ici à la courbe fictive, de préférence un cercle, eu égard à la section préférentiellement circulaire du tambour 6, telle que ladite courbe fictive est définie par l'intersection de la surface de réception cylindrique du tambour 6, qui reçoit les constituants du bloc carcasse 3, avec un plan de jauge normal à l'axe central X6 du tambour. La direction circonférentielle C6 correspond ainsi, en tout point considéré de la circonférence du tambour, au vecteur ortho-radial qui définit la tangente à ladite circonférence du tambour au point considéré, dans ledit plan de jauge.

De façon préférentielle, ledit plan de jauge correspond quant à lui au plan équatorial P_EQ du bandage, et plus particulièrement au plan équatorial du bloc carcasse 3, centré axialement par rapport au bloc carcasse 2, et qui subdivise ainsi axialement ledit bloc carcasse 3 en deux hémisphères sensiblement symétriques, de même hauteur axiale, de telle sorte que la direction circonférentielle C6 coïncide sensiblement avec la ligne équatoriale du bloc carcasse 3.

De préférence, les renforts de carcasse 5 s'étendent initialement, lors de la pose « à plat » de la nappe carcasse 4 sur le tambour 6, avant conformation, selon des plans radiaux qui contiennent l'axe central X6 du tambour.

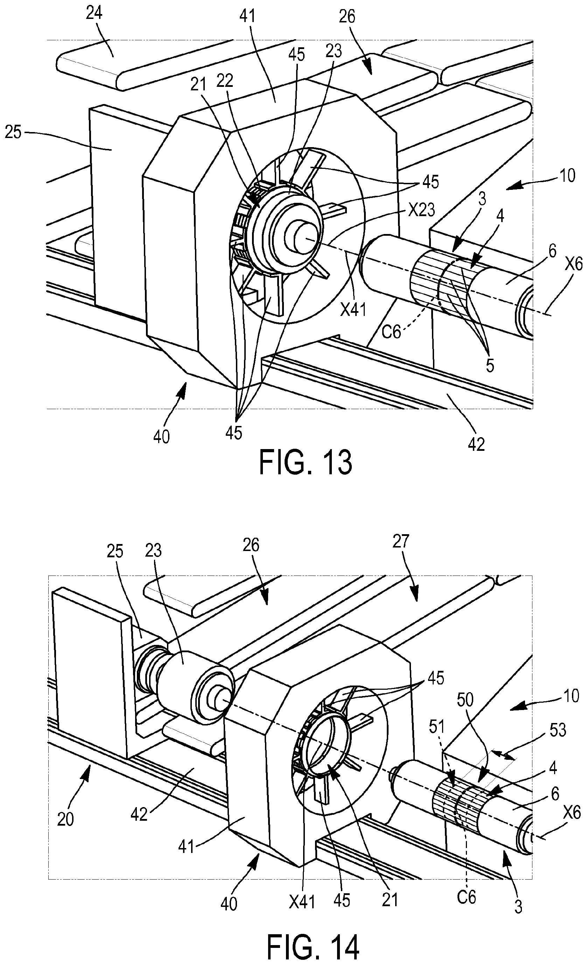

Initialement, après la pose de la nappe carcasse 4 sur le tambour 6, lesdits renforts de carcasse 5 s'étendent ainsi de préférence parallèlement à l'axe central X6, tel que cela est notamment visible sur les figures 13 et 14. La première orientation angulaire A5_1 correspond dans ce cas à une orientation perpendiculaire, les renforts de carcasse 5 formant en effet un angle de 90 degrés (ou de sensiblement 90 degrés, par exemple compris entre 85 et 95 degrés) par rapport à la direction circonférentielle C6.

Bien entendu, on pourrait, sans sortir du cadre de l'invention, choisir une autre première orientation angulaire A5_1, selon laquelle les renforts de carcasse 5 seraient initialement disposés en oblique par rapport à la direction circonférentielle C6, tel que cela est le cas à titre purement illustratif sur la figure 18, par exemple en formant, avant conformation, un angle compris entre 27 et 150 degrés, de préférence entre 56 degrés et 123 degrés par rapport à ladite direction circonférentielle C6.

Quelle que soit la première orientation angulaire A5_1 retenue, les renforts de carcasse 5 s'étendent parallèlement les uns aux autres, et sont chacun axialement continu, depuis une première lisière 4L formant, en référence à la direction axiale du tambour X6, une extrémité axiale de la nappe carcasse 4 jusqu'à une seconde lisière 4R formant l'extrémité axiale opposée de ladite nappe carcasse 4.

Par « continu », on entend que chaque matériau constitutif de l'élément filaire de renfort, et donc plus globalement ledit élément filaire de renfort, ici en particulier chaque renfort de carcasse 5, s'étend de façon ininterrompue, de préférence d'un seul tenant, sur toute la longueur dudit élément filaire de renfort.

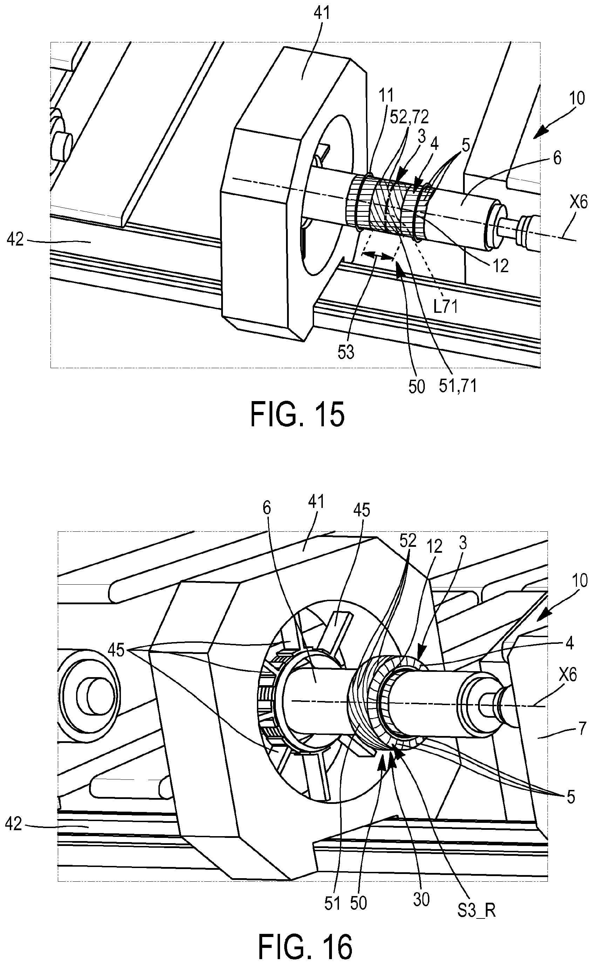

De la sorte, les renforts de carcasse 5 pourront relier l'une à l'autre deux tringles 11, 12 annulaires. Lesdites tringles annulaires 11, 12, de préférence réalisées à partir de tresses de fil métallique, seront intégrées au bloc carcasse 3, concentriquement à l'axe central du tambour X6, tel que cela est visible sur la figure 15, pour permettre ultérieurement la fixation du bandage sur une jante.

On notera que, de préférence, chacune desdites tringles 11, 12 sera rapportée sur le bloc carcasse 3 sous forme d'un sous-ensemble dit « bloc-talon » qui comprend ladite tringle 11, 12 ainsi qu'un anneau de gomme, non représenté ici, qui est dit « bourrage tringle », qui présente une section transverse sensiblement triangulaire, et dont la base radialement interne est agencée pour appuyer contre voire entourer la section de la tringle 11, 12 dans la zone de bourrelet par laquelle le bandage vient en appui sur la jante.

La zone de confection 2, et plus préférentiellement le premier système d'amenée 10, seront bien entendu agencés pour poser sur le tambour d'autres éventuels composants du bloc carcasse 3.

En particulier, le premier système d'amenée 10 permettra de préférence d'enrouler sur le tambour 6, préalablement à la pose de la nappe carcasse 4, un film dit « gomme intérieure », qui est destiné à assurer l'étanchéité à l'air du bandage.

Plus particulièrement, le premier système d'amenée 10 pourra être conçu pour poser et enrouler sur le tambour 6, autour de l'axe central X6, un « complexe » (non représenté), c'est-à-dire un sous-ensemble qui aura été, pour réduire le temps de cycle de la machine 1, préassemblé avant d'être amené au tambour 6, et qui comprendra par exemple la gomme intérieure, ainsi que deux bandes de gomme couvrant les portions latérales de ladite gomme intérieure et destinées à former les flancs extérieurs du bandage, et, éventuellement, des coussins de gomme dits « protecteurs de tringle », destinés à renforcer les bourrelets du bandage au niveau des tringles 11, 12.

La nappe carcasse 4 sera ensuite posée sur le tambour 6, par-dessus ledit complexe.

Tel que cela est visible notamment sur les figures 1, 3 et 6, la machine 1 comprend également une seconde zone 20, dite « zone de finition » 20, agencée pour réaliser un second bloc 21 annulaire constitutif du bandage, dit « bloc sommet » 21, qui comprend au moins une bande de roulement 22.

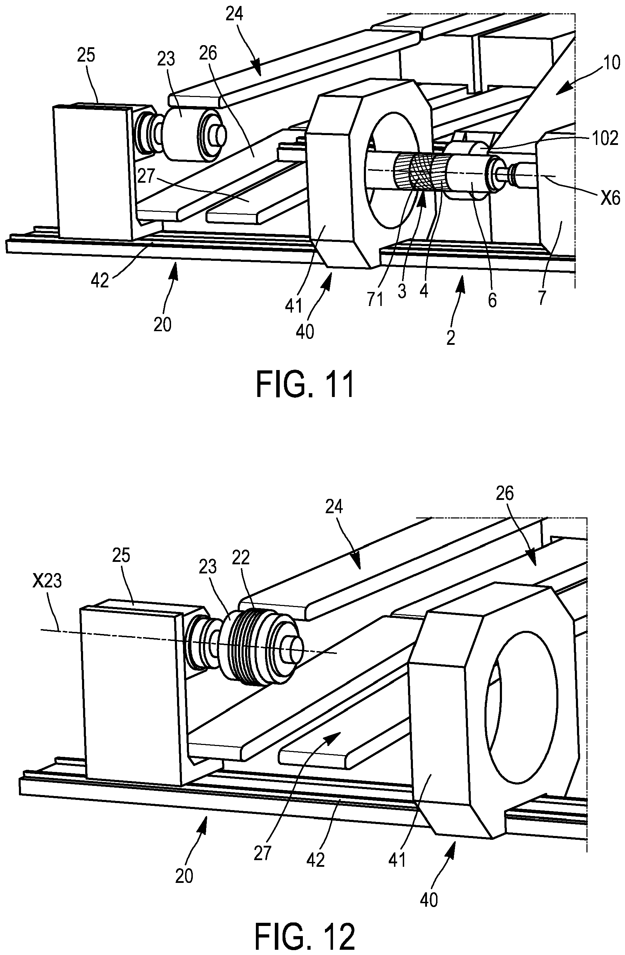

Ladite zone de finition 20 comprend à cet effet une virole 23 montée en rotation autour d'un axe central X23 de virole, ainsi qu'un second système d'amenée 24 permettant de poser la bande de roulement 22 par enroulement sur la virole 23, autour de l'axe central de virole X23, tel que cela est illustré sur la figure 12.

La virole 23 est portée, de préférence en porte-à-faux, par un bâti de virole 25, capable d'entraîner ladite virole 23 en rotation autour de son axe central X23. Ledit bâti de virole 25 est pourvu à cet effet d'un moteur d'entraînement, de préférence un moteur électrique.

La virole 23 présentera de préférence une surface de réception présentant une forme de révolution autour de l'axe central de virole X23, par exemple une forme cylindrique de base circulaire ou bien encore une forme bombée (convexe) toroïdale, ladite surface de réception étant destinée à recevoir les composants du bloc sommet 21.

De préférence, notamment par souci de compacité, l'axe central de virole X23 sera parallèle à l'axe central de tambour X6.

Plus globalement, la direction commune, parallèle à ces deux axes centraux X6, X23 définira, par convention, une direction axiale globale de la machine 1.

Bien entendu, la zone de finition 20 comportera, s'il y a lieu, les équipements 26, 27 nécessaires pour poser par enroulement sur la virole 23 les différents autres composants constitutifs du bloc sommet 21.

En particulier, la zone de finition 20 pourra comporter un équipement de trancanage, conçu pour poser sur la virole 23, avant la mise en place de la bande de roulement 22 et donc radialement sous ladite bande de roulement 22, une frette de cerclage, ladite frette étant obtenue en enroulant une bande renforcée continue en hélice autour de l'axe central de virole X23, selon plusieurs spires consécutives jointives.

La bande renforcée utilisée pour réaliser la frette contiendra des renforts de frette continus, qui s'étendent parallèlement les uns aux autres et parallèlement à la direction longitudinale de ladite bande renforcée de sorte que, in fine, lesdits renforts de frette se retrouveront dans le bloc sommet 21, et plus globalement dans le bandage, orientés par rapport à la direction circonférentielle C6 selon un angle qui correspond à l'angle d'hélice des spires de ladite frette, et qui est relativement faible, par exemple inférieur ou égal à 5 degrés, de sorte que lesdits renforts s'étendent sensiblement selon la direction circonférentielle.

En pratique, la mise en place de la frette au sein de la zone de finition 20 sera réalisée en choisissant, lors du trancanage, un angle d'hélice qui sera de préférence inférieur ou égal à 10 degrés, préférentiellement inférieur ou égal à 7 degrés, et plus préférentiellement inférieur ou égal à 5 degrés.

Les équipements 26, 27 de la zone de finition pourront comprendre au besoin plusieurs systèmes d'amenée, tel que cela est visible notamment sur les figures 1, 2, 3, 6 ou 7, chaque système d'amenée étant capable d'acheminer au moins l'un des constituants du bloc sommet 21 jusqu'à la virole 23.

Tel que cela est visible sur les figures susmentionnées, les équipements, notamment les systèmes d'amenée, 24, 26, 27, pourront être étagés axialement et/ou verticalement au niveau de la zone de finition 20, pour une bonne compacité de l'ensemble.

Le bâti de virole 25 pourra alors être pourvu d'un mécanisme de déplacement lui permettant de se déplacer horizontalement (selon l'axe de virole X23) et/ou verticalement de manière à ce que ledit bâti de virole 25 puisse venir présenter la virole 23 successivement en vis-à-vis des différents équipements et systèmes d'amenée 24, 26, 27, afin de recueillir les différents constituants du bloc sommet 21 dans l'ordre souhaité.

La machine 1 comprend en outre un système de conformation 30, agencé pour réaliser une opération de conformation qui provoque une expansion radiale du bloc carcasse 3 présent sur le tambour de confection 6, afin d'obtenir un bloc carcasse 3 dit « conformé », de forme toroïdale, tel que cela est visible sur la figure 16.

Pour une meilleure clarté des figures, le système de conformation 30, connu en soi, n'est pas représenté de façon détaillée.

Un tel système de conformation 30 permet pour l'essentiel de rapprocher axialement la première tringle 11 et la seconde tringle 12 l'une de l'autre, tout en repoussant radialement, selon un mouvement d'expansion radiale centrifuge par rapport à l'axe central X6, la portion axialement centrale du bloc carcasse 3, de sorte à conférer audit bloc carcasse 3 une forme bombée, toroïdale, qui est proche, voire coïncide, avec la forme définitive du bandage. Ce faisant, on provoque également une expansion circonférentielle du bloc carcasse 3, le long de la direction circonférentielle C6.

Plus particulièrement, ledit système de conformation 30 permettra de faire passer le bloc carcasse 3 d'une configuration rétractée, de préférence cylindrique de base circulaire, qui correspond à la configuration « à plat » selon laquelle la gomme intérieure et la nappe carcasse 4 sont initialement posées par enroulement sur le tambour 6, à une configuration déployée, dans laquelle ledit bloc carcasse 3 présente une forme toroïdale, bombée radialement vers l'extérieur, qui correspond de préférence sensiblement à la forme qu'adoptera ledit bloc carcasse 3 au sein du bandage fini.

De préférence, le système de conformation 30 fonctionne par gonflage, de sorte à produire l'expansion du bloc carcasse 3 en insufflant, à l'intérieur de la cavité étanche qui est délimitée par la paroi que forment les couches constitutives du bloc carcasse 3, et plus particulièrement par la paroi que forme la gomme intérieure, un gaz, par exemple de l'air, sous une pression prédéterminée, dite « pression de conformation », supérieure à la pression atmosphérique ambiante.

Une fois le bloc carcasse 3 conformé, on procède de préférence à une opération de retroussage qui consiste à rabattre par-dessus les tringles 11, 12, et plus globalement par-dessus les blocs-talons, contre les portions latérales du bloc carcasse 3 conformé, les pans latéraux de la nappe carcasse 4 qui dépassent en saillie axiale des tringles ainsi que les bandes formant les flancs extérieurs.

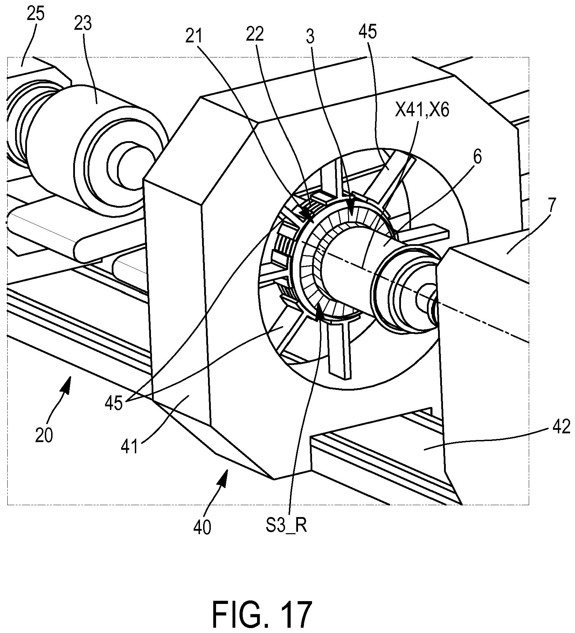

La machine 1 comprend également une troisième zone 40 dite « zone d'assemblage » 40, qui est agencée pour assembler le bloc sommet 21 de manière concentrique sur le bloc carcasse 3 conformé, tel que cela est illustré sur la figure 17, afin d'obtenir un bandage.

Pour effectuer cet assemblage, le bloc sommet 21, fermé en anneau sur lui-même lors de sa fabrication sur la virole 23, est enfilé axialement le long et autour du tambour 6 portant le bloc carcasse 3.

Pour faciliter l'engagement du bloc sommet 21 autour du bloc carcasse 3, il est possible de rétracter radialement, de façon partielle, le bloc carcasse 3, par rapport à la configuration pleinement conformée qui correspond à une expansion radiale maximale.

Cette rétractation partielle permet au bloc carcasse 3 de conserver une forme toroïdale, dans une configuration d'expansion intermédiaire dans laquelle ledit bloc carcasse 3 possède un rayon hors tout qui présente une valeur intermédiaire strictement comprise entre d'une part le rayon de base du tambour qui correspond à la configuration rétractée « plate » de pose de la nappe carcasse 4 et d'autre part un rayon maximal qui correspond à la configuration déployée de conformation, dans laquelle le bloc carcasse 3 est pleinement expansé.

Cette rétractation partielle peut être obtenue en relâchant légèrement la pression de gonflage appliquée par le système de conformation 30, pour porter la pression de gonflage à un niveau intermédiaire entre la pression atmosphérique ambiante et la pression de conformation, ledit niveau intermédiaire étant dit « pression d'introduction », et en augmentant (légèrement) la distance qui sépare axialement les deux tringles 11, 12 l'une de l'autre.

Une fois le bloc sommet 21 engagé et superposé sur le bloc carcasse 3, on peut réaliser un rouletage pour presser, sensiblement radialement, ledit bloc sommet 21 sur le bloc carcasse 3, afin d'assurer une bonne cohésion entre les deux blocs 21, 3, en particulier au niveau des épaules du bandage, où les extrémités latérales (ailes) de la bande de roulement 22 viennent épouser les flancs du bloc carcasse 3.

De même, une autre opération de rouletage, exerçant cette fois une pression principalement axiale, permet d'assurer une bonne cohésion, au niveau des flancs, des rabats de la nappe carcasse 4 formés par-dessus les tringles 11, 12 lors de l'opération de retroussage mentionnée plus haut.

On notera à ce titre que l'on pourra opter soit pour une variante de procédé selon laquelle on retrousse la nappe carcasse 4 par-dessus les tringles 11, 12, en rouletant les flancs, dans la zone de confection 2, avant de poser ensuite le bloc sommet 21, de manière à ce que les extrémité axiales dudit bloc sommet, et plus particulièrement les extrémités axiales de la bande de roulement 22 formant les épaules du bandage, viennent se poser par-dessus les flancs préalablement rouletés, soit pour une autre variante de procédé selon laquelle, cette fois, on laisse ouverts les pans de flancs (au moins dans leur portion radialement la plus éloignée de l'axe du tambour X6) lors de la réalisation du bloc carcasse 3, puis l'on pose le bloc sommet 21 sur le bloc carcasse 3, et seulement ensuite on retrousse, en les rouletant, lesdits flancs, par-dessus les extrémités axiales de la bande de roulement 22.

En tout état de cause, une fois le bandage (cru) ainsi constitué, ledit bandage est retiré du tambour, par exemple au moyen d'un bras d'évacuation robotisé (non représenté), puis emporté jusqu'à une presse de cuisson pour y être vulcanisé.

Pour réaliser l'assemblage, la zone d'assemblage 40 comprend un dispositif de transfert 41, du genre anneau de transfert 41, qui est agencé pour recevoir le bloc sommet 21 en provenance de la virole 23 de la zone de finition 20, tel que cela est illustré sur la figure 13, et pour transférer ledit bloc sommet 21 sur et autour du bloc carcasse 3 conformé, tel que cela est illustré successivement sur les figures 14 et 17.

Le dispositif de transfert 41 est de préférence formé par un anneau de transfert 41, et pourra donc être assimilé à un tel anneau de transfert 41 dans ce qui suit.

Ledit anneau de transfert 41 est avantageusement coaxial au tambour 6 de confection, de manière à ce que le tambour 6, portant le bloc carcasse 3, puisse venir se glisser à l'intérieur dudit anneau de transfert 41, portant le bloc sommet 21, par un mouvement de rapprochement en translation axiale, suivant une direction parallèle, et de préférence colinéaire, à l'axe central X6 du tambour 6.

Comme cela est illustré sur les figures 13, 14 et 17, l'anneau de transfert 41 assure de préférence une préhension du bloc sommet 21 par l'extérieur, en venant en prise sur la surface radialement externe de la bande de roulement 22, de préférence en plusieurs secteurs angulaires qui, pour assurer une prise équilibrée et stable, sont de préférence répartis sur au moins 180 degrés, au moins 270 degrés, voire sur 360 degrés autour de l'axe central X41 dudit anneau de transfert 41.

On pourrait, dans l'absolu, envisager que l'anneau de transfert 41 saisisse par exemple le bloc sommet 21 par un système de ventouses.

Cependant, de préférence, tel que cela est visible sur les figures 13, 14 et 16, l'anneau de transfert 41 saisira le bloc sommet 21 au moyen d'une pluralité de mors 45 qui sont montés mobiles radialement et répartis en azimut, sensiblement en étoile, autour de l'axe central X41 dudit anneau de transfert, de sorte à pouvoir venir en appui centripète de façon simultanée sur le bloc sommet 21 selon des direction distinctes et sensiblement concourantes. Ainsi, le maintien du bloc sommet 21 dans l'anneau de transfert 41 pourra être assuré mécaniquement, par constriction, en tirant parti de la rigidité intrinsèque de la structure annulaire fermée dudit bloc sommet 21.

De préférence, pour permettre à l'anneau de transfert 41 de détacher le bloc sommet 21 de la virole 23, le bâti de virole 25 rapproche et enfile axialement la virole 23 dans l'anneau de transfert 41, dont l'axe central X41 est alors de préférence confondu avec l'axe central X23 de ladite virole, comme cela est visible sur la figure 13.

Une fois le bloc sommet 21 saisi par l'anneau de transfert 41, la virole 23 est dégagée axialement par un mouvement de recul axial du bâti de virole 25, comme cela est illustré sur la figure 14.

On peut alors déplacer le bâti de tambour 7 pour engager axialement le tambour 6 dans l'anneau de transfert 41, de préférence par le côté opposé à celui utilisé pour engager la virole 23, de sorte que l'anneau de transfert 41 puisse appliquer le bloc sommet 21 en superposition radiale sur le, et tout autour du, bloc carcasse 3, tel que cela est illustré sur la figure 17. L'axe central X41 de l'anneau de transfert 41 est alors de préférence confondu avec l'axe central X6 du tambour.

On notera que l'agencement de la virole 23 en porte-à-faux, ici en saillie axiale, par rapport au bâti de virole 25, de même que l'agencement du tambour 6 en porte-à-faux, ici en saillie axiale, par rapport au bâti de tambour 7, facilite l'introduction alternative de la virole 23, puis respectivement, du tambour 6, à l'intérieur de l'anneau de transfert 41.

Dans l'absolu, on pourrait envisager que l'anneau de transfert 41 soit lui-même mobile, notamment en translation axiale, guidée parallèlement aux axes centraux respectifs de la virole X23 et du tambour X6, de sorte à pouvoir assurer au moins une partie du déplacement nécessaire pour passer de la virole 23 au tambour 6, et plus particulièrement pour transférer axialement le bloc sommet 21 de la zone de finition 20 jusqu'à la zone d'assemblage 40.

Toutefois, de façon particulièrement préférentielle, l'anneau de transfert 41 sera stationnaire, de manière à occuper une position fixe prédéterminée dans la zone d'assemblage 40, par rapport au référentiel dans lequel est implantée la machine 1 (typiquement le sol du bâtiment), tandis que ce sont le bâti de virole 25, respectivement le bâti de tambour 7, qui formeront des éléments mobiles et effectueront les déplacements nécessaires, ici plus particulièrement les déplacements axiaux nécessaires, par rapport au référentiel d'implantation, et donc par rapport à l'anneau de transfert 41, pour venir se placer alternativement au sein dudit anneau de transfert 41, respectivement depuis la zone de finition 20 et depuis la zone de confection 2.

Avantageusement, l'utilisation d'un anneau de transfert fixe 41, de préférence placé dans une position sensiblement centrale par rapport au tambour 6 et à la virole 23, permettra d'effectuer facilement, et de manière fiable et reproductible, une prise d'origine machine par rapport audit anneau de transfert 41, et ainsi d'utiliser un référentiel commun pour effectuer les différents déplacements du bâti de tambour 7 et du bâti de virole 25.

Selon un agencement préférentiel de la machine 1, qui est notamment applicable que l'anneau de transfert 41 soit fixe ou mobile, le tambour de confection 6, ici plus particulièrement le bâti de tambour 7, le dispositif de transfert 41, ici l'anneau de transfert 41, et la virole 23, ici plus particulièrement le bâti de virole 25, sont alignés dans cet ordre selon un même rail de guidage principal 42, de préférence rectiligne, de sorte que la virole 23, ici plus particulièrement le bâti de virole 25, peut aller et venir le long dudit rail de guidage principal 42 depuis la zone de finition 20 jusqu'à la zone d'assemblage 40 pour déposer le bloc sommet 21 dans le dispositif de transfert 41, tandis que le tambour de confection 6, ici plus particulièrement le bâti de tambour 7, peut aller et venir depuis la zone de confection 2 jusqu'à la zone d'assemblage 40 pour présenter le bloc carcasse 3 conformé dans le dispositif de transfert 41, en vis-à-vis, axialement, du bloc sommet 21 contenu dans ledit dispositif de transfert 41.

Un tel agencement permet avantageusement de placer la zone d'assemblage 40, et le dispositif de transfert 41, dans une position centrale, tandis que les opérations de confection d'une part, c'est-à-dire de fabrication du bloc carcasse 3, et de finition d'autre part, c'est-à-dire de fabrication du bloc sommet 21, sont réparties dans les « ailes » de la machine 1, de part et d'autre de la zone d'assemblage 40, respectivement dans une première zone de confection 2 située axialement, le long du rail de guidage principal 42, d'un premier côté de la zone d'assemblage 40 et du dispositif de transfert 41, et dans une seconde zone de finition 20 située, axialement, d'un second côté de la zone d'assemblage 40 et du dispositif de transfert 41, opposé au premier côté.

Une telle répartition spatiale, bien équilibrée, permet d'une part de répartir les tâches de fabrication des différents blocs 3, 21 constitutifs du bandage, et ainsi de réduire le temps de cycle en effectuant certaines tâches en temps masqué, comme cela sera expliqué plus bas, et d'autre part de limiter l'amplitude des déplacements des bâtis de tambour 7 et de virole 25, ce qui permet un gain de temps et d'énergie.

En outre, l'alignement (dans cet ordre) des zones de confection 2, d'assemblage 40 et de finition 20 selon une direction commune matérialisée par le rail de guidage principal 42 permet avantageusement de réaliser un agencement rationnel et compact de la machine 1, au sein de laquelle les systèmes d'amenée 10, 24, 26, 27, 70 chargés d'approvisionner les composants nécessaires à la fabrication des blocs carcasse 3 et sommet 21 peuvent avantageusement s'étendre, tel que cela est visible sur les figures 1, 3 et 6, transversalement à la direction du rail de guidage principal 42, et plus préférentiellement perpendiculairement à la direction du rail de guidage principal 42, de préférence selon des directions parallèles à l'horizontale.

Les opérations d'approvisionnement et de maintenance de la machine 1 s'en trouvent avantageusement simplifiées.

De préférence, la direction du rail de guidage 42 est parallèle à l'axe central du tambour X6, et, plus globalement, à l'axe central X23 de la virole et à l'axe central X41 de l'anneau de transfert, et matérialise ainsi la direction axiale (globale) de la machine 1.

Selon l'invention, la machine 1 comprend un système de polarisation 50 qui est agencé pour amener au contact du bloc carcasse 3, avant l'opération de conformation, une structure annulaire dite « structure de polarisation » 51, qui est centrée sur l'axe central du tambour X6 et pourvue d'un second jeu d'éléments filaires de renfort 52, dits « renforts de polarisation » 52, qui présentent par rapport à la direction circonférentielle du tambour C6 une seconde orientation angulaire A52_1, qui est différente de la première orientation angulaire A5_1 des renforts de carcasse 5.

Ladite structure de polarisation 51 ainsi amenée et positionnée par le système de polarisation 50 s'étend de sorte à chevaucher partiellement la nappe carcasse 4 le long de l'axe central du tambour X6, selon une zone dite « zone de recouvrement » 53, si bien que lors de l'opération de conformation, les renforts de polarisation 52 interagissent avec les renforts de carcasse 5 afin de modifier, dans la zone de recouvrement 53, l'orientation angulaire desdits renforts de carcasse 5 par rapport à la direction circonférentielle du tambour C6, de telle sorte que l'on obtient ainsi un bloc carcasse 3 conformé et polarisé.

Tel que cela est notamment visible sur les figures 2, 5, 11, 15 ou 18, les renforts de polarisation 52 s'étendent de préférence parallèlement entre eux, et préférentiellement en continu d'une extrémité axiale à l'autre extrémité axiale de la zone de recouvrement 53, et plus globalement d'une extrémité axiale à l'autre de la structure de polarisation 51.

Par « polarisé », on désigne un objet ou une structure, ici la nappe carcasse 4 et plus globalement le bloc carcasse 3 dans son ensemble, qui est issu d'une opération de polarisation au sens de l'invention.

Comme indiqué dans la partie introductive de la présente demande et rappelé ci-dessus, une opération de « polarisation » consiste à faire se chevaucher une partie d'une nappe carcasse contenant des éléments filaires de renfort dits « renforts de carcasse » avec une structure de polarisation 52 contenant des renforts de polarisation 52, de sorte à ce que lesdits renforts se croisent et puissent ainsi interagir afin de se réorienter mutuellement sous l'effet de la conformation.

Bien entendu, la nappe carcasse 4 et la structure de polarisation 51 seront liées de façon suffisamment solidaire l'une à l'autre, au moins avant et pendant l'opération de conformation, pour qu'elles ne glissent pas librement l'une par rapport à l'autre, et que leurs renforts 5, 52 respectifs puissent ainsi interagir, à la manière des mailles (ici parallélépipédiques) d'un réseau grillagé, dont les noeuds correspondent aux croisements virtuels desdits renforts 5, 52 (considérés en projection sur la surface de la zone de recouvrement 53) .

En pratique, et tel que cela est notamment bien visible sur la figure 18, la zone de recouvrement 53 correspond à une portion centrale de la nappe carcasse 4, qui se situe à distance de chacune des extrémités axiales 4L, 4R de ladite nappe carcasse 4, et qui est destinée à se retrouver sous la bande de roulement 22, entre les épaules du bandage.

Les portions latérales de la nappe carcasse 4, non recouvertes par la structure de polarisation 51 et donc situées hors de la zone de recouvrement 53, sont avantageusement destinées à former les flancs gauche S3_L et droit S3_R du bloc carcasse 3 et plus globalement du bandage. Lesdits flancs correspondent, de façon connue en soi, au portions du bloc carcasse 3, et plus globalement du bandage, destinées à se redresser sensiblement radialement lors de l'opération de conformation pour relier chacune une tringle 11, 12 à l'épaule la plus proche, à l'extrémité axiale correspondante de la bande de roulement 22.

Ainsi, si l'opération de polarisation fait tourner en lacet (dans un plan fictif, ortho-radial par rapport à l'axe de tambour X6, et donc tangent à la direction circonférentielle C6 au point considéré) les renforts de carcasse 5 situés sur la surface cylindrique expansée du bloc carcasse 3, en modifiant ainsi l'orientation angulaire desdits renforts de carcasse 5 par rapport à la direction circonférentielle C6, comme cela est illustré en trait pointillé sur la figure 18, de sorte à conférer auxdits renforts de carcasse 5 une troisième orientation angulaire A5_2, distincte de la première orientation angulaire A5_1, ladite opération de polarisation n'affecte en revanche pas, ou sensiblement pas, les bords de la nappe carcasse 4 formant les flancs S3_L, S3_R, non recouverts par la structure de polarisation 51, et donc situés en-dehors de la zone de recouvrement 53.

De manière analogue, simultanée, et réciproque, l'action des renforts de carcasse 5 sur les renforts de polarisation 52 pendant l'opération de conformation réoriente lesdits renforts de polarisation pour les faire passer de la seconde orientation angulaire A52_1 à une quatrième orientation angulaire A52_2 différente de ladite seconde orientation angulaire A52_1, tel que cela est illustré sur la figure 18.

On notera par ailleurs que, dans les portions de flancs S3_L, S3_R, hors de la zone de recouvrement 53, l'opération de conformation tend à « radialiser » les renforts de carcasse 5, c'est-à-dire à aligner sensiblement lesdits renforts de carcasse 5 sur des plans radiaux contenant l'axe du tambour X6, si tant est, du reste, que lesdits renforts de carcasse 5 n'étaient pas déjà initialement disposés parallèlement audit axe de tambour X6, lors de la pose de la nappe carcasse 4.

Ainsi, si les renforts de carcasse 5 étaient initialement parallèles à l'axe de tambour X6 (A5_1 = 90 degrés), lesdits renforts conserveront alors sensiblement, lors de l'opération de conformation, leur orientation initiale, selon des plans radiaux contenant l'axe central du tambour X6.

A l'inverse, si les renforts de carcasse 5 sont initialement posés en oblique par rapport à l'axe central du tambour X6, alors l'opération de conformation tend à les ré-aligner sur les plans radiaux, tel que cela est illustré sur la figure 16 et la figure 18.

De préférence, afin de permettre au tambour 6 d'accompagner la rotation azimutale relative Thêta_12 des tringles 11, 12, dite « rotation de vrillage » Thêta_12, généralement de l'ordre de 5 degrés à 10 degrés en pratique, qui s'opère durant la conformation du bloc carcasse 3 et la radialisation des renforts de carcasse 5 dans les flancs, comme cela est visible sur la figure 18, la première tringle 11 pourra être portée par un premier berceau du tambour 6 et la seconde tringle par un second berceau du même tambour 6, monté en libre rotation par rapport au premier berceau, autour de l'axe de tambour X6.

En tout état de cause, la polarisation, localisée dans la zone de recouvrement 53, telle qu'elle est opérée selon l'invention, permet au bloc carcasse 3, et donc plus globalement au bandage, d'adopter une architecture de renfort polarisée sous son sommet, tout en conservant une architecture de renfort radiale dans ses flancs.

Selon l'invention, la machine comporte une unité de commande 60 automatique, par exemple une unité de commande 60 électronique, qui comprend au moins un programme permettant de faire exécuter automatiquement à la machine 1 un cycle, dit « cycle de fabrication de bandage à sommet polarisé », qui comprend une étape (a) de réalisation d'un bloc sommet 21 dans la zone de finition 20, une étape (b) de préparation d'un bloc carcasse 3 conformé et polarisé qui comprend une sous-étape (b1) de réalisation d'un bloc carcasse 3 dans la zone de confection 2 puis une sous-étape (b2) de conformation et de polarisation au cours de laquelle on conforme et l'on polarise ledit bloc carcasse 3 en provenance de la zone de confection 2 pour obtenir un bloc carcasse 3 conformé et polarisé, ledit cycle prévoyant que l'étape (a) de réalisation du bloc sommet 21 se chevauche temporellement au moins en partie avec l'étape (b) de préparation du bloc carcasse 3, de sorte qu'une partie au moins de la réalisation du bloc sommet 21 s'opère en temps masqué par rapport à la préparation du bloc carcasse 3, puis enfin une étape (c) d'assemblage au cours de laquelle, dans la zone d'assemblage 40, le dispositif de transfert 41 place et fixe le bloc sommet 21 sur le bloc carcasse 3 conformé et polarisé, de manière à obtenir un bandage, en l'occurrence un bandage possédant une architecture à sommet polarisé.

Plus préférentiellement, l'unité de commande 60 est programmée de manière à ce que l'étape (a) de réalisation du bloc sommet 21, qui se déroule dans la zone de finition 20, et au cours de laquelle on fabrique ledit bloc sommet 21 en posant sur la virole 23 le ou les composants dudit bloc sommet 21, parmi lesquels la bande de roulement 22, se chevauche temporellement au moins en partie avec la sous-étape (b1) de réalisation du bloc carcasse 3, qui se déroule dans la zone de confection 2, et au cours de laquelle on fabrique ledit bloc carcasse 3, ici de préférence « à plat », en posant sur le tambour 6 les composants dudit bloc carcasse 3, parmi lesquels la nappe carcasse 4.

Avantageusement, la mise en oeuvre d'une unité de commande 60 qui assure automatiquement une gestion centralisée et synchronisée des différentes zones 2, 20, 40 et des différents systèmes 6, 7, 10, 23, 25, 24, 30, 41, 50 de la même machine 1 permet d'optimiser le déroulement des étapes susmentionnées, et en particulier d'exécuter simultanément, au moins pour partie, d'une part la préparation d'un bloc carcasse 3, et d'autre part la fabrication d'un bloc sommet 21 destiné à intégrer le même bandage que ledit bloc carcasse 3.

Plus particulièrement, la machine 1 peut ainsi fabriquer automatiquement un bloc sommet 21 dans la zone de finition 20 et placer ledit bloc sommet 21 en attente dans l'anneau de transfert 41, tandis que par ailleurs, au moins en partie dans le même intervalle de temps, elle fabrique, puis conforme et polarise sur le tambour 6, un bloc carcasse 3, qu'elle enfile ensuite, avec le tambour 6, dans l'anneau de transfert 41 pour que ledit bloc carcasse 3 reçoive, sur sa surface radialement externe, ledit bloc sommet 21.

On notera que la préparation d'un bloc carcasse 3 conformé et polarisé, dans la zone de confection 2, peut être en pratique plus longue que la réalisation du bloc sommet 21 correspondant dans la zone de finition 20, de sorte que c'est généralement le bloc sommet 21 qui est achevé en premier et placé en attente dans l'anneau de transfert 41, en attendant la fin du processus de fabrication, de conformation et de polarisation du bloc carcasse 3.

En tout état de cause, l'enchaînement automatique des étapes susmentionnées permettra de produire automatiquement un bandage au cours d'un cycle puis, sitôt ledit bandage évacué pour sa mise en cuisson, de recommencer un même cycle pour produire automatiquement un second bandage, et ainsi de suite.

On pourra ainsi produire séquentiellement, unité après unité, autant de bandages que souhaité, et ce avantageusement sans gaspillage de matière, puisque les composants préparés et acheminés au sein de la machine 1 sont immédiatement et intégralement consommés en étant intégrés à leur bloc 3, 21 respectif, et plus globalement au bandage effectivement fabriqué au cours du cycle concerné.

Quelle que soit par ailleurs la variante considérée, la machine 1 comprend de préférence, tel que cela est visible notamment sur les figures 1, 3, et 6, un troisième système d'amenée 70 qui est agencé pour amener une nappe dite « nappe sommet » 71, laquelle nappe sommet 71 est destinée à intégrer le bandage entre la nappe carcasse 4 et la bande de roulement 22 pour renforcer ledit bandage.

Pour exercer sa fonction de renforcement, ladite nappe sommet 71 comprend une couche de matériau élastomérique qui s'étend, selon une direction longitudinale L71, depuis une extrémité de tête 71F jusqu'à une extrémité de queue 71R, et au sein de laquelle se trouvent des éléments filaires de renfort 72, dits « renforts de nappe sommet » 72, qui sont disposés parallèlement les uns aux autres selon un angle dit « angle de nappe sommet » prédéterminé par rapport à la direction longitudinale L71, tel que cela est notamment visible sur les figures 1 et 15.

Lesdits renforts de nappe sommet 72 s'étendent chacun en continu d'un bord latéral de la nappe sommet 71 au bord latéral axialement opposé de ladite nappe sommet 71.

De préférence, les extrémités 71F, 71R longitudinales de la nappe sommet 71 forment des biseaux, dont la direction de coupe correspond à la direction, oblique, de l'angle de nappe sommet, de sorte que les bords desdits biseaux sont parallèles aux renforts de nappe sommet 72.

Comme expliqué plus haut, les renforts de nappe sommet 72 viennent se superposer en se croisant avec les renforts de nappe carcasse 5, et le cas échéant avec une troisième famille de renforts qui sont contenus dans une frette (non représentée) du bloc sommet 21 et orientés sensiblement selon la direction circonférentielle C6, de sorte que ces trois types de renforts superposés et croisés forment, dans leur ensemble, une structure d'armature triangulaire.

De préférence, les renforts de nappe sommet 72 sont formés par des fils métalliques ou des câbles à base de fils métalliques.

Selon une première possibilité de mise en oeuvre de l'invention, le système de polarisation 50 pourra utiliser comme structure de polarisation 51 un manchon polarisant, qui contient les renforts de polarisation 52 et qui fait partie intégrante du tambour 6 de confection sur lequel on vient poser la nappe carcasse 4, de sorte que ledit manchon polarisant puisse faire office de structure de polarisation 51 réutilisable, qui vient temporairement interagir avec le bloc carcasse 3 lorsque l'on procède à une expansion radiale du tambour 6 de confection pour réaliser l'opération de conformation, puis qui se trouve séparée du bandage lorsque l'on retire ledit bandage du tambour 6 de confection.

En pareil cas, la nappe sommet 71 sera de préférence intégrée au bloc sommet 21, et non pas au bloc carcasse 3, afin de ne pas interférer avec l'action du manchon polarisant 51 du tambour 6 lorsque l'on procède à l'expansion dudit tambour 6 pour provoquer la conformation et la polarisation de la nappe carcasse 4, dans la zone de recouvrement 53.

Ainsi, la nappe sommet 71 sera intégrée initialement au bloc sommet 21, puis finalement posée sur la nappe carcasse 4 et le bloc carcasse 3 en même temps que le reste du bloc sommet 21, après conformation et polarisation dudit bloc carcasse 3.

Un tel procédé de polarisation par manchon réutilisable a notamment fait l'objet du brevet FR-2 797 213 déposé par la demanderesse.

Le système de polarisation 50 à manchon réutilisable pourrait par exemple correspondre à la figure 14, si l'on considérait que, sur cette figure 14, les tracés en pointillé de la structure de polarisation 51 correspondraient ici aux limites axiales d'un manchon de polarisation sous-jacent, qui envelopperait la surface expansible du tambour 6, sous la zone de recouvrement 53 de la nappe carcasse 4. Un tel manchon de polarisation se présenterait de préférence sous la forme d'une membrane élastique tubulaire, engagée sur le tambour 6, et au sein de laquelle se trouveraient les renforts de polarisation 52.

Selon une seconde possibilité de mise en oeuvre de l'invention, que l'on pourra préférer à la précédente, le système de polarisation 50 utilisera cette fois la nappe sommet 71 elle-même comme structure de polarisation 51, de sorte que les renforts de nappe sommet 72 forment les renforts de polarisation 52.

Le troisième système d'amenée 70 sera alors agencé à cet effet pour amener la nappe sommet 71 dans la zone de confection 2 et enrouler ladite nappe sommet 71 sur le tambour 6 de confection jusqu'à refermer l'extrémité de queue 71R de ladite nappe sommet 71 sur l'extrémité de tête 71F de cette même nappe sommet 71, de manière à intégrer ladite nappe sommet 71 au bloc carcasse 3, avant l'opération de conformation.

Avantageusement, la portion polarisée de la nappe carcasse 4, sous le sommet du bandage, dans la zone de recouvrement 53, pourra se substituer à l'une des nappes sommet nécessaires, puisque les renforts de carcasse 5 ainsi orientés en oblique par rapport à la direction circonférentielle C6 pourront se superposer et se croiser avec les renforts 72 de la nappe sommet 71 d'une part, et avec les renforts circonférentiels de la frette d'autre part, pour former des structures triangulaires d'armature. On pourra ainsi avantageusement n'utiliser qu'une seule nappe sommet 71 au lieu de deux nappes sommet pour constituer le bandage.

De préférence, lors de la pose et de l'enroulement de la nappe sommet 71 sur le tambour 6, au cours desquels ladite nappe sommet 71 vient se refermer en anneau sur elle-même, par-dessus la nappe carcasse 4, la direction longitudinale L71 de ladite nappe sommet 71 se confond avec la direction circonférentielle C6 du tambour 6 et du bloc carcasse 3.

Ainsi, l'angle de nappe que forment les renforts de nappe sommet 72 par rapport à la direction longitudinale L71 de la nappe sommet coïncide avec l'orientation angulaire, et plus particulièrement avec la seconde orientation angulaire A52_1, des renforts de polarisation 52.

En pratique, selon cette seconde possibilité de mise en oeuvre, la zone de recouvrement 53 correspond à la portion de la nappe carcasse 4 couverte par la nappe sommet 71, et coïncide donc en pratique avec l'étendue surfacique (complète) de ladite nappe sommet 71, tandis que les flancs S3_L, S3_R du bloc carcasse 3, qui ne seront pas soumis au phénomène de polarisation, correspondent aux portions de la nappe carcasse 4 non recouvertes par la nappe sommet 71, et formant initialement, sur la surface cylindrique du tambour 6, des bandes annulaires qui sont situées en débordement, de part et d'autre axialement, de ladite nappe sommet 71.

Contrairement à la première possibilité de mise en oeuvre qui faisait appel à un manchon de polarisation réutilisable, la présente seconde possibilité de mise en oeuvre utilise comme structure de polarisation la nappe sommet 71 elle-même, qui est ainsi intégrée au bloc carcasse 3 avant conformation de sorte que ses renforts 72 interagissent avec les renforts de carcasse 5 pour provoquer la polarisation, et qui se retrouve donc intégrée définitivement au bandage, en tant qu'élément de structure dudit bandage, et plus particulièrement en tant qu'élément de structure du bloc carcasse 3.

En d'autres termes, le procédé selon cette seconde possibilité de mise en oeuvre revient à intégrer à demeure au bandage la structure de polarisation 51, qui est ainsi consommée à chaque cycle de fabrication d'un bandage à sommet polarisé.

On notera que l'on pourra envisager plusieurs variantes de machines 1 à même de mettre en oeuvre l'utilisation de la nappe sommet 71 comme structure de polarisation 51.

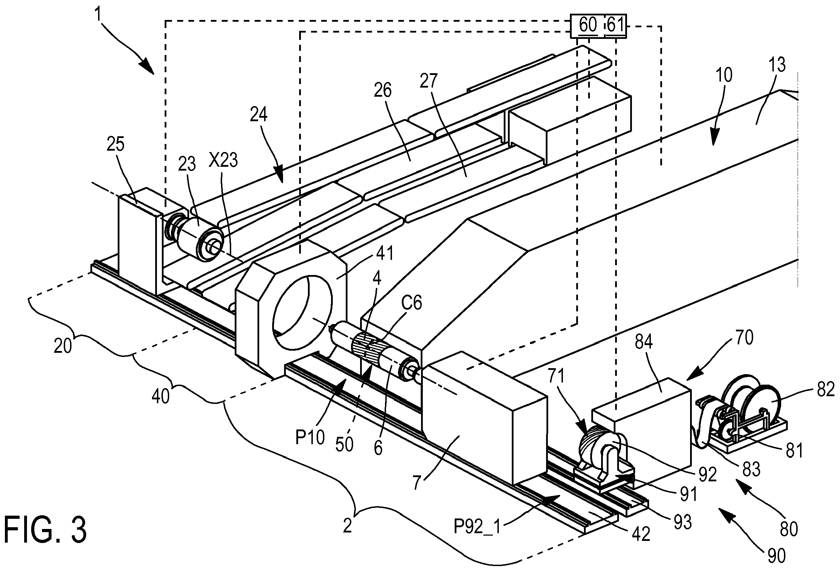

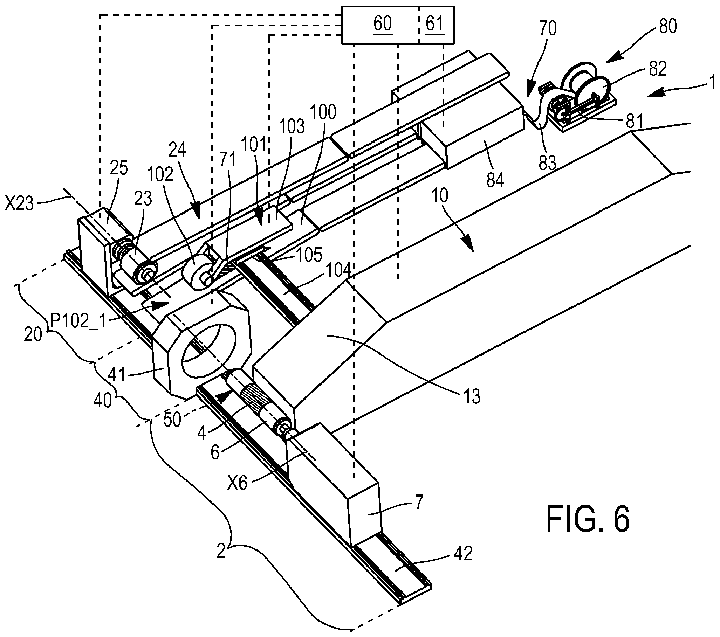

En particulier, on pourra prévoir des variantes (figures 1 et 3) au sein desquelles la nappe sommet 71 est directement acheminée dans la zone de confection 2, par un troisième système d'amenée 70 qui est intégralement et exclusivement situé du même côté que la zone de confection 2, par rapport à la zone d'assemblage 40 et son dispositif de transfert 41, le long du rail de guidage 72, ou bien au contraire des variantes (figure 6) au sein desquelles ledit troisième système d'amenée 70 s'étend également au moins en partie du même côté que la zone de finition 20, et permet à la nappe sommet 71 de bifurquer vers la zone de confection 2, lorsque nécessaire, en franchissant le plan vertical fictif dit « plan de séparation » qui est normal au rail de guidage 42 (et plus globalement qui est normal à l'axe central X6 du tambour 6 et/ou à l'axe central X23 de virole 23) et qui passe par la zone d'assemblage 40 et/ou par l'anneau de transfert 41, de préférence par le milieu axial de ladite zone d'assemblage 40 et/ou par le milieu axial de l'anneau de transfert 41.

Selon une première variante de réalisation, illustrée sur les figures 1 et 2, le troisième système d'amenée 70 chargé d'acheminer la nappe sommet jusqu'à la zone de confection 2 pourra être superposé avec le premier système d'amenée 10 chargé d'acheminer la nappe carcasse 4, de sorte que le tambour 6 peut recevoir successivement la nappe carcasse 4 puis la nappe sommet 71 sans qu'il soit nécessaire de modifier la position axiale dudit tambour 6, le long de l'axe central de tambour X6.

Plus particulièrement, tel que cela est visible sur les figures 1 et 2, le premier et le troisième système d'amenée 10, 70 pourront notamment comporter respectivement un premier tapis de convoyage 13, acheminant la nappe carcasse 4, et le cas échéant susceptible d'acheminer également le complexe comprenant la gomme intérieure et les flancs extérieurs, et un second tapis de convoyage 73, chargé d'acheminer la nappe sommet 71, et être agencés de sorte que chacun desdits premier et second tapis de convoyage 13, 73 débouche dans la zone de confection 2, en vis-à-vis du tambour 6.

Les deux tapis de convoyage 13, 73 seront de préférence agencés transversalement, et plus préférentiellement perpendiculairement, au rail de guidage principal 42, et étagés verticalement, c'est-à-dire disposés l'un au-dessus de l'autre, de sorte à déboucher tous les deux à une même abscisse le long dudit rail de guidage principal 42, et donc à un même emplacement axial en vis-à-vis du tambour 6.

Ainsi, la nappe carcasse 4 puis la nappe sommet 71 pourront être acheminées successivement, par lesdits tapis de convoyage 13, 73, au même emplacement de la zone de confection 2 pour être enroulées sur le tambour 6, ce qui permettra d'économiser des déplacements du bâti de tambour 7.

Pour obtenir cette première variante de réalisation, on pourra avantageusement installer, en amont du second tapis de convoyage 73, et plus globalement en amont du premier système d'amenée 10, un dispositif de préparation de nappe sommet 80, qui alimente le second tapis de convoyage 73 en nappes sommet 71.

Ledit dispositif de préparation de nappe sommet 80 comprend de préférence un dévidoir 81 destiné à recevoir une bobine 82 contenant une bande de base 83 en matériau élastomérique contenant les renforts de nappe sommet 72, ainsi qu'un outil de coupe 84 agencé pour sectionner la bande de base 83 sur toute sa largeur, suivant un angle de coupe qui correspond à l'angle des renforts de nappe sommet 72, afin de détacher dans ladite bande de base des laizes successives, dont chacune présente une longueur égale à la longueur voulue pour la nappe sommet 71, et forme ainsi ladite nappe sommet 71.

Selon une seconde variante de réalisation, illustrée sur les figures 3, 4 et 5, la nappe sommet 71 pourra être acheminée au moyen d'un distributeur auxiliaire 90, distinct et axialement distant du premier système d'amenée 10.

Ledit distributeur auxiliaire 90 pourra comprendre un dispositif de préparation de nappe sommet 80 comme décrit plus haut, mais agencé cette fois en déport axial du premier système d'amenée 10, à distance de ce dernier, et de préférence vers l'extérieur, c'est-à-dire que ledit dispositif de préparation de nappe sommet 80 sera implanté, selon la direction longitudinale du rail de guidage principal 42, plus loin axialement de la zone d'assemblage 40 que ne l'est le premier système d'amenée 10.

De préférence, le distributeur auxiliaire 90 comprendra en outre un chariot 91, pourvu d'un rouleau applicateur 92, et monté mobile, de préférence sur un rail de guidage auxiliaire 93 parallèle au rail de guidage principal 42, entre d'une part une position de réception P92_1, située axialement en vis-à-vis du dispositif de préparation de nappe sommet 80, et dans laquelle le rouleau applicateur 92 peut recevoir la nappe sommet 71 en provenance dudit dispositif de préparation de nappe sommet 80, et plus particulièrement en provenance de l'outil de coupe 84, et d'autre part une position d'application P92_2, dans laquelle le rouleau applicateur 92 peut transférer la nappe sommet 71 sur le tambour 6, autour de la nappe carcasse 4.

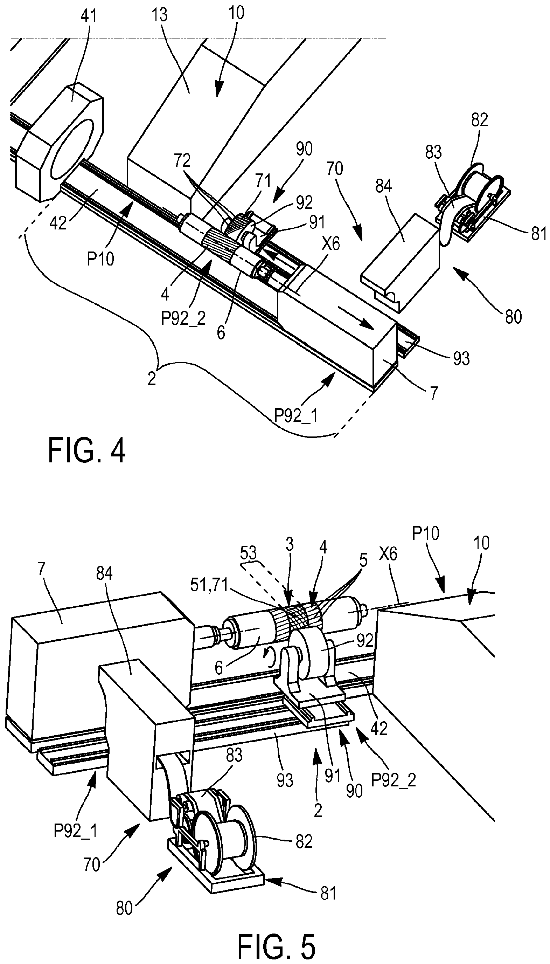

De préférence, la position d'application P92_2 est, tel que cela est visible sur les figures 4 et 5, située en position intermédiaire, comprise axialement entre la position de réception P92_1 et la position axiale P10 où le premier système d'amenée 10 débouche en vis-à-vis du tambour 6 pour pouvoir poser la nappe carcasse 4.

De préférence, l'axe du rouleau applicateur 92 est parallèle à l'axe central X6 du tambour 6, de sorte que le transfert de la nappe sommet 71 peut s'effectuer en venant appliquer le rouleau applicateur 92, chargé de la nappe sommet 71, contre le tambour, et en animant simultanément le tambour 6 et le rouleau applicateur 92 de mouvements de rotation de sens contraires.

Bien entendu, le rouleau applicateur 92 sera dimensionné de sorte à pouvoir recevoir et convoyer la nappe sommet 71 jusqu'au tambour 6, puis transférer ladite nappe sommet 71 sur le tambour 6.

En particulier, la largeur axiale du rouleau applicateur 92 sera égale ou supérieure à la largeur axiale de la nappe sommet 71.

De même, la circonférence du rouleau applicateur 92 présentera une longueur strictement supérieure à la longueur hors-tout de la nappe sommet 71, ladite longueur hors-tout s'entendant de la longueur de ladite nappe sommet 71 mesurée depuis l'extrémité de tête 71F, ici la pointe de tête, jusqu'à l'extrémité de queue 71R la plus éloignée de ladite extrémité de tête 71F.

De la sorte, les extrémités de tête 71F et de queue 71R de la nappe sommet 71 ne pourront pas se rejoindre, ni à plus forte raison se chevaucher, ni même se chevaucher en azimut autour de l'axe central du rouleau applicateur 92, lorsque la nappe sommet 71 se trouve enroulée sur ledit rouleau applicateur 92. Ainsi, la nappe sommet 71 reste non seulement ouverte, en ceci qu'elle ne sera pas fermée en anneau sur elle-même, lorsqu'elle se trouve sur le rouleau applicateur 92, mais également suffisamment ouverte pour que, lorsque le rouleau applicateur 92 vient presser l'extrémité de tête 71F contre le tambour 6 (figure 4), l'extrémité de queue 71R reste à distance de l'aire de contact entre le rouleau applicateur 92 et le tambour 6, et n'est donc pas emprisonnée entre le rouleau applicateur 92 et le tambour 6, de sorte que la pointe de queue de la nappe sommet 71 n'interfère pas avec la pose de la pointe de tête de cette même nappe sommet 71 sur le tambour 6.

En pratique, le rouleau applicateur 92 présentera donc notamment un diamètre strictement supérieur au diamètre initial, non expansé, du tambour 6.

Le distributeur auxiliaire 90, et plus particulièrement les déplacements axiaux alternés du chariot 91 le long du rail de guidage auxiliaire 93, ainsi que la rotation du rouleau applicateur 92, seront pilotés par l'unité de commande 60, et pourront être réalisés au moyen de moteurs électriques.

Selon une troisième variante de réalisation, illustrée sur les figures 6, 7, 8, 9 et 10, on pourra prévoir un acheminement indirect de la nappe sommet 71, au cours duquel tout d'abord on achemine initialement la nappe sommet 71 vers, voire jusque dans, la zone de finition 20, comme cela est le cas lorsque l'on souhaite intégrer ladite nappe sommet 71 au bloc sommet 21 pour réaliser un bandage à architecture radiale conventionnelle, sans polarisation du sommet, puis ensuite on transfère ladite nappe sommet 71 vers et jusqu'à la zone de confection 2, pour l'intégrer au bloc carcasse 3 plutôt qu'au bloc sommet 21.

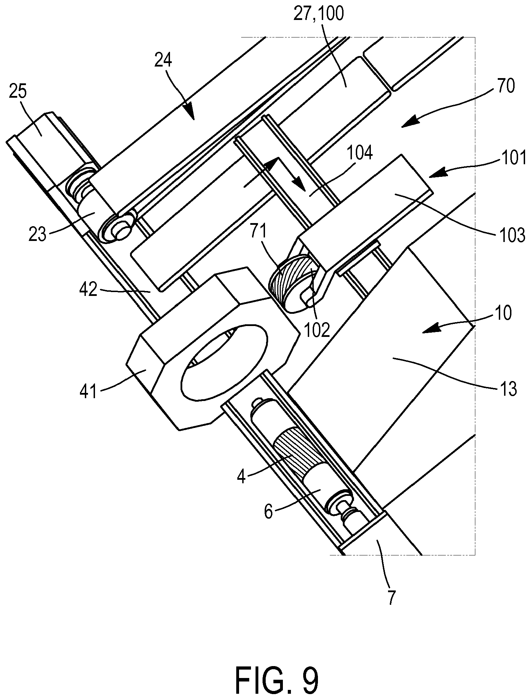

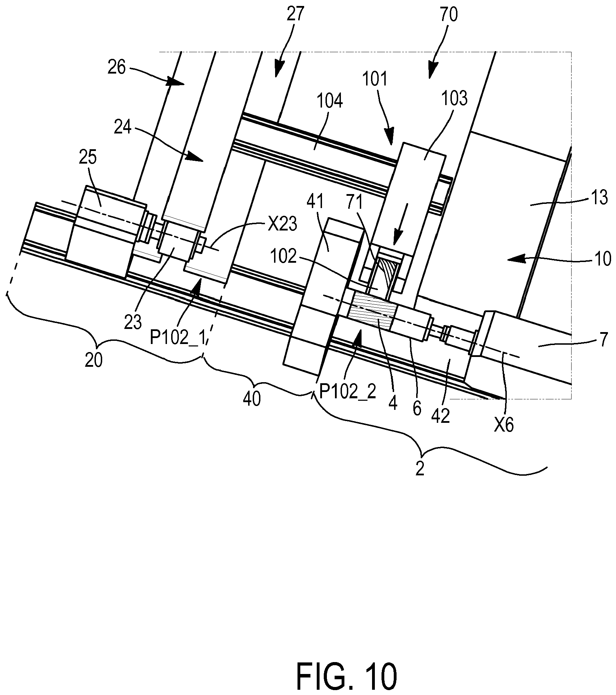

De préférence, selon cette troisième variante, le troisième système d'amenée 70 comprend d'une part un convoyeur d'alimentation 100, qui amène la nappe sommet 71 dans la zone de finition 20, et d'autre part un dispositif de répartition 101 qui est agencé pour venir prélever la nappe sommet 71, acheminée par le convoyeur d'alimentation 100, dans la zone de finition 2, tel que cela est visible sur les figures 6 à 8, puis pour transporter ladite nappe sommet 71 jusqu'au tambour 6 de confection, dans la zone de confection 2, tel que cela est illustré sur les figures 10 et 11, en contournant la zone d'assemblage 40 et son dispositif de transfert 41, tel que cela est visible sur la figure 9.

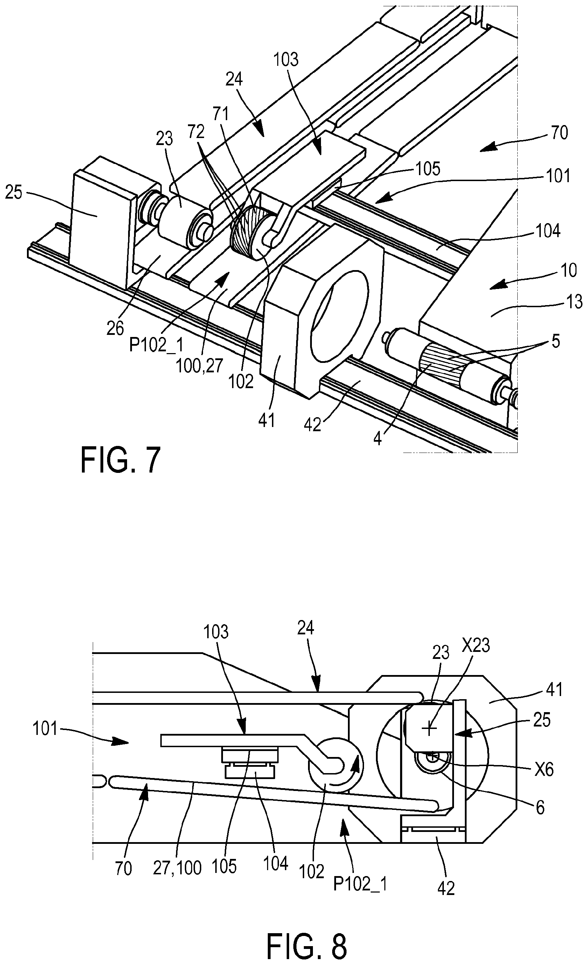

Tel que cela est visible sur les figures 6 à 11, le dispositif de répartition 101 peut comprendre un rouleau intermédiaire 102 qui est monté mobile entre d'une part une position de prélèvement P102_1, qui est située dans la zone de finition 20 et dans laquelle ledit rouleau intermédiaire 102 vient prélever la nappe sommet 71 sur le convoyeur d'alimentation 100, tel que cela est visible sur les figures 6 et 7, et d'autre part une position de déchargement P102_2 qui est située dans la zone de confection 2 et dans laquelle ledit rouleau intermédiaire 102 vient, tel que cela est visible sur les figures 10 et 11, appliquer la nappe sommet 71 sur le tambour 6 de confection pour intégrer ladite nappe sommet 71 au bloc carcasse 3 avant l'opération de conformation.

De préférence, le rouleau intermédiaire 102 est porté par un chariot 103 monté mobile sur un rail de guidage auxiliaire 104, de préférence parallèle au rail de guidage principal 42. L'axe central de rotation du rouleau intermédiaire 102 est de préférence parallèle à l'axe central du tambour X6.

Le chariot 103 comprend en outre de préférence une table de recul 105, qui autorise un mouvement de translation selon une direction qui est transverse, de préférence perpendiculaire, au rail de guidage principal 42, et plus globalement perpendiculaire aux axes centraux du tambour X6 et de la virole X23.

Cette table de recul 105, de préférence croisée perpendiculairement au rail de guidage auxiliaire 104, permet avantageusement au rouleau intermédiaire 102 d'effectuer alternativement d'une part des mouvements de recul, qui permettent d'éloigner le rouleau intermédiaire 102 du rail de guidage principal 42 et des axes centraux du tambour X6 et de la virole X23 pour permettre audit rouleau intermédiaire 102 de contourner et franchir l'obstacle que forme l'anneau de transfert 41, tel que cela est visible sur la figure 9, et d'autre part des mouvements d'avance, qui permettent de rapprocher à nouveau le rouleau intermédiaire 102 du rail de guidage principal 42 et de l'axe central du tambour X6 pour permettre notamment audit rouleau intermédiaire 102 de coopérer avec le tambour 6, dans la zone de confection 2, afin d'y déposer la nappe sommet 71.

Pour une meilleure compacité de la machine 1, les mouvements de recul du rouleau intermédiaire 102 s'effectue en direction de l'arrière de la machine, en remontant vers l'amont du convoyeur d'alimentation 100, et plus globalement en remontant vers l'amont des systèmes d'amenée 10, 24, 26, 27, 70, du côté desdits systèmes d'amenée par rapport au rail de guidage principal 42.

De même, pour limiter l'emprise au sol de la machine 1 tout en évitant des interférences entre les différents systèmes et dispositifs de la machine, la position de déchargement 102_2, dans la zone de confection 2, sera de préférence située axialement, le long du rail de guidage principal 42, entre le premier système d'amenée 10 et l'anneau de transfert 41, tel que cela est visible sur la figure 10.

De préférence, en position de prélèvement P102_1, le rouleau intermédiaire 102 viendra prélever la nappe sommet 71 sur le tapis du convoyeur d'alimentation 100 par pelage, en roulant sur ledit tapis.

La rotation du rouleau intermédiaire 102 pourra être effectuée soit en maintenant l'axe central dudit rouleau intermédiaire 102 en position fixe, soit en même temps que l'on exécute un mouvement de recul dudit axe central du rouleau intermédiaire 102. Dans ce second cas, le chariot 103 pourra être agencé pour pouvoir accommoder une éventuelle variation de hauteur de l'axe central du rouleau intermédiaire 102, notamment une élévation verticale dudit axe, si le tapis du convoyeur 100 est en pente (comme c'est le cas sur la figure 8) et que le rouleau intermédiaire 102 remonte ladite pente lors de son mouvement de recul.

De manière analogue, le transfert de la nappe sommet 71 depuis le rouleau intermédiaire 102 sur le tambour 6 s'effectuera de préférence en appliquant le rouleau intermédiaire 102 portant la nappe sommet 71 contre le tambour 6, et en mettant le tambour 6 et le rouleau intermédiaire 102 en rotations de sens contraires.

Bien entendu, la largeur axiale et la longueur de circonférence du rouleau intermédiaire 102 seront adaptées au transport et au transfert de la nappe sommet 71, de manière analogue à ce qui a été décrit plus haut en référence au rouleau applicateur 92. Ainsi, en particulier, le rouleau intermédiaire 102 présentera une circonférence strictement supérieure à la longueur hors-tout de la nappe sommet 71, un diamètre strictement supérieur au diamètre de base, non expansé, du tambour 6, et une largeur axiale supérieure à la largeur de la nappe sommet 71.

De préférence, les mouvements de translation du chariot 103 le long du rail de guidage auxiliaire 104, de translation sur la table de recul 105, et de rotation du rouleau intermédiaire 102, seront contrôlés par l'unité de commande 60, et de préférence animés au moyen de moteurs électriques.

On notera par ailleurs que, de préférence, les organes du troisième système d'amenée 70, destinés à acheminer, manipuler et transférer la nappe carcasse 4, tels que le second tapis de convoyage 73, le rouleau applicateur 92 du distributeur auxiliaire 90, le convoyeur d'alimentation 100 et le rouleau intermédiaire 102, seront de préférence pourvus d'un système d'aimantation, de sorte à pouvoir retenir la nappe carcasse 4 par adhérence magnétique.

Dans le cas particulier de la troisième variante décrite ci-dessus, on pourra prévoir que dans la zone terminale du convoyeur d'alimentation 100, là où le rouleau intermédiaire peut venir prélever la nappe carcasse 4 par pelage, le système d'aimantation du convoyeur d'alimentation 100 peut adopter alternativement une configuration active, dans laquelle il exerce un champ magnétique suffisant pour maintenir la nappe carcasse 4 plaquée contre la surface dudit convoyeur d'alimentation jusqu'à ce que ladite nappe carcasse 4 atteigne le tambour 6, et une configuration désactivée, dans laquelle le champ magnétique est réduit voire supprimé dans ladite zone terminale, de sorte à devenir inférieur au champ magnétique d'attraction exercé par le rouleau intermédiaire 102, afin de permettre un transfert de la nappe carcasse 4 du convoyeur d'alimentation 100, dont se détache la nappe carcasse 4, vers le rouleau intermédiaire 102.

Le système d'aimantation du convoyeur d'alimentation 100 pourra comporter des aimants, de préférence des aimants permanents, disposés sur une semelle magnétique placée sous la surface dudit convoyeur d'alimentation 100, parallèlement à ladite surface. Le passage de la configuration active à la configuration désactivée, et réciproquement, pourra alors par exemple se faire en éloignant la semelle magnétique de la surface du convoyeur d'alimentation 100, et réciproquement en rapprochant ladite semelle magnétique de la surface du convoyeur d'alimentation 100.

Selon une possibilité d'agencement particulièrement préférentielle, qui peut s'appliquer dans l'absolu à toute machine 1 selon l'invention, et en particulier à l'une quelconque des première, seconde et troisième variantes de réalisation décrites dans ce qui précède, l'unité de commande 60 est associée à un sélecteur 61 qui permet soit d'activer, soit de désactiver le système de polarisation 50, de sorte que l'unité de commande 60 puisse faire exécuter à la machine 1 respectivement soit un cycle de fabrication de bandage à sommet polarisé, au cours duquel on associe une structure de polarisation 51 au bloc carcasse 3 de sorte à modifier l'orientation des renforts de carcasse 5 dans la zone de recouvrement 53 lors de l'opération de conformation, soit un cycle de fabrication d'un bandage dit « à architecture radiale conventionnelle », au sein duquel on réalise l'opération de conformation sans avoir associé de structure de polarisation 51 au bloc carcasse 3.

Avantageusement, une telle machine 1 sera particulièrement polyvalente, puisqu'elle permettra de diversifier la production en fonction des besoins, et notamment d'adapter facilement la production de l'atelier dans laquelle ladite machine est implantée 1.

Avantageusement, le sélecteur 61 selon l'invention permettra en effet d'intégrer une nappe sommet 71 selon les besoins soit au bloc carcasse 3, de sorte que ladite nappe sommet 71 sera réunie avec la nappe carcasse 4 avant conformation et provoquera donc la polarisation souhaitée, soit au bloc sommet 21, de sorte que ladite nappe sommet 71 sera réunie avec la nappe carcasse 4 seulement après conformation.

Une telle machine 1 devra bien entendu comporter, en sus du système de polarisation 50 que le sélecteur 61 permet d'utiliser de manière optionnelle, les équipements 24, 26, 27, et notamment les systèmes d'amenée, nécessaires pour acheminer jusqu'à la zone de finition 20 et intégrer dans le bloc sommet 21, sur la virole 23, les composants nécessaires à l'obtention d'un bandage à architecture radiale conventionnelle, et ici plus particulièrement pour acheminer et intégrer dans le bloc sommet 21 une première nappe sommet et une seconde nappe sommet dont les renforts présentent une direction différente des renforts de la première nappe sommet.

A cet effet, on trouvera de préférence, parmi lesdits équipements 24, 26, 27 de la zone de finition 20, outre le second système d'amenée 24 prévu pour acheminer la bande de roulement 22, et outre le système de trancanage de frette, au moins un système d'amenée 27 de première nappe sommet et un système d'amenée 26 de seconde nappe sommet, qui prennent de préférence la forme de deux tapis de convoyage distincts, débouchant dans la zone de finition 20.

Comme cela a été indiqué plus haut, le bâti de virole 25 pourra déplacer la virole 23, dans la zone de finition 20, de sorte à présenter ladite virole 23 successivement en vis-à-vis du système d'amenée 27 de première nappe sommet, pour recevoir la première nappe sommet, puis en vis-à-vis du système d'amenée 26 de seconde nappe sommet, pour recevoir la seconde nappe sommet autour de la première nappe sommet, puis en vis-à-vis du système de trancanage de frette circonférentielle, pour être complété par les spires d'une frette qui vient cercler l'ensemble formé par la première et la seconde nappe sommet, puis enfin en vis-à-vis du second système d'amenée 24 qui délivre la bande de roulement 22, par-dessus la frette.

Le bloc sommet 21 ainsi constitué, comprenant (au moins) les deux nappes sommet dont les renforts se croisent, sera ensuite rapporté sur un bloc carcasse 3, qui contient quant à lui la nappe carcasse 4 (ainsi que la gomme intérieure et les flancs extérieurs, comme dit plus haut), mais qui est dépourvu de nappe sommet 71, et qui aura été préalablement réalisé dans la zone de confection 2, puis conformé par l'expansion du tambour 6, mais pas polarisé, en raison de l'absence de structure de polarisation 51.

A titre d'exemple, non limitatif, on pourrait notamment mettre en oeuvre le sélecteur 61 au sein de la troisième variante de réalisation qui a été décrite plus haut et qui est représentée sur les figures 6 à 11.

Selon un tel exemple, le convoyeur d'alimentation 100 du troisième système d'amenée 70 pourra être agencé de manière à pouvoir coopérer sélectivement soit avec la virole 23, dans la zone de finition 20, de manière à poser et enrouler la nappe sommet 71 (lorsque ladite nappe sommet 71 est destinée à former la première de deux nappes sommet d'un bandage à architecture radiale conventionnelle) sur la virole 23 et ainsi intégrer ladite nappe sommet 71 au bloc sommet 21 avant que ledit bloc sommet 21 ne soit transféré et posé par le dispositif de transfert 41 sur le bloc carcasse 3 conformé, soit avec le rouleau intermédiaire 102 qui appartient au dispositif de répartition 101 et qui est monté mobile entre d'une part une position de prélèvement P102_1, qui est située dans la zone de finition 20 et dans laquelle ledit rouleau intermédiaire 102 vient prélever la nappe sommet 71 sur le convoyeur d'alimentation 100, et d'autre part une position de déchargement P102_2 qui est située dans la zone de confection 2 et dans laquelle ledit rouleau intermédiaire 102 vient appliquer la nappe sommet 71 sur le tambour de confection 6 pour intégrer ladite nappe sommet 71 (qui forme alors l'unique nappe sommet d'un bandage à architecture à sommet polarisé) au bloc carcasse 3 avant l'opération de conformation.

Selon une telle variante de réalisation, le convoyeur d'alimentation 100 forme avantageusement une branche qui est commune d'une part au système d'amenée 27 de première nappe sommet, utilisé dans le cadre d'un cycle de fabrication de bandage à architecture radiale conventionnelle, et d'autre part au système d'amenée 70 d'une nappe sommet 71 unique, utilisé dans le cadre d'un cycle de fabrication de bandage à sommet polarisé. Dans ce second cas, la bifurcation de l'acheminement de la nappe sommet 71, prévue en aval du convoyeur d'alimentation 100, et qui permet de renvoyer la nappe sommet 71 de la zone de finition 20 à la zone de confection 2, est avantageusement opérée au moyen du dispositif de répartition 101 et de son rouleau intermédiaire 102.

Le fonctionnement des différentes variantes de réalisation susmentionnées va maintenant être décrit plus en détail, en référence aux figures.

On notera que, à titre indicatif, quelle que soit du reste l'architecture du bandage fabriqué, les angles formés par les éléments filaires de renfort au sein d'une nappe sommet, ou de chacune des (typiquement deux) « nappes sommet » au sens de l'invention, sont de préférence initialement compris, avant conformation, entre 4 degrés et 60 degrés, voire entre 15 degrés et 50 degrés, par rapport à la direction longitudinale de la nappe sommet considérée, et plus préférentiellement par rapport à la direction circonférentielle C6. En tout état de cause, lesdits angles de nappe sommet seront de préférence choisis pour que, après conformation, et dans le bandage fini, l'angle de la nappe sommet conformée soit compris entre 15 degrés et 50 degrés, de préférence entre 18 degrés et 30 degrés par rapport à la direction circonférentielle du bandage.

On notera également que, lors de la pose d'un composant à base de matériau élastomérique, de type nappe 4, 71 ou bande de roulement 22, sur la virole 23, sur le tambour 6, et le cas échéant par-dessus un autre composant déjà posé, l'adhésion se fait de préférence du simple fait du « collant » (« tack », en anglais) du matériau élastomérique constitutif du composant considéré.

Quelle que soit la variante de réalisation de la machine 1 considérée, si le sélecteur 61 opte pour un cycle de fabrication de bandage à architecture radiale conventionnelle, alors le bloc sommet 21 est réalisé en intégrant audit bloc sommet au moins deux nappes sommet aux renforts respectifs croisés.

Pour ce faire, dans la zone de finition 20, la virole 23 se présente successivement en vis-à-vis du système d'amenée 27 de la première nappe sommet 71, qui pose et enroule ladite première nappe sommet en un premier anneau fermé sur ladite virole 23, puis en vis-à-vis du système d'amenée 26 de la seconde nappe sommet, qui pose sur cette même virole 23 une seconde nappe sommet en enroulant celle-ci par-dessus et autour de la première nappe sommet, de sorte à former un second anneau fermé superposé au premier anneau, puis de préférence en vis-à-vis d'un système de pose de frette par trancanage, puis enfin en vis-à-vis du système 24 d'amenée de la bande de roulement 22 qui pose ladite bande de roulement par-dessus la frette.

Une fois le bloc sommet 21 « conventionnel » ainsi constitué, le bâti de virole 25 déplace axialement la virole 23, le long du rail de guidage principal 42, afin de quitter la zone de finition 20 pour gagner la zone d'assemblage 40 contiguë de ladite zone de finition 20, et aligne l'axe central X23 de la virole 23 avec l'axe central X41 de l'anneau de transfert 41, afin d'engager, ici par le côté gauche sur les figures 1, 3, 6, la virole et le bloc sommet 21 à l'intérieur dudit anneau de transfert 41.

Le bloc sommet 21 est ensuite saisi par l'anneau de transfert 41, et placé en attente dans la zone d'assemblage 40.

Le bâti de virole 25 exécute alors un mouvement de retour, dans le sens inverse du précédent, de sorte à extraire la virole 23 hors de l'anneau de transfert 41, pour libérer l'accès à l'intérieur dudit anneau de transfert 41, et faire revenir la virole 23 dans sa position initiale, au sein de la zone de finition 20.

Pendant ce temps, dans la zone de confection 2, on réalise le bloc carcasse 3. A cet effet, le premier système d'amenée 10 achemine et pose successivement, par enroulement en anneaux fermés superposés sur le tambour 6, le complexe comprenant (au moins) la gomme intérieure et les flancs extérieurs, puis, par-dessus et autour dudit complexe, la nappe carcasse 4, formant ainsi un bloc carcasse 3 annulaire cylindrique.

Dans la mesure où il convient de ne pas associer de structure de polarisation 51 à ce bloc carcasse 3, on s'abstiendra ici d'y incorporer une nappe sommet.

On engage ensuite les tringles 11, 12, et plus particulièrement les « blocs-talons » correspondants, sur le tambour 6, par-dessus le bloc carcasse 3.

Le tambour 6 procède à l'expansion du bloc carcasse 3 pour lui conférer une forme toroïdale. Les flancs sont alors rabattus par-dessus les tringles 11, 12 et pressés par rouletage contre la nappe carcasse 4.

Le tambour 6 et le bloc carcasse 3 sont alors légèrement rétractés, de sorte que le bloc carcasse 3 conserve une forme toroïdale expansée, de diamètre externe supérieur au diamètre initial « à plat » que ledit bloc carcasse 3 présentait avant conformation, lors de la pose sur le tambour 6, mais de diamètre externe strictement inférieur au diamètre interne du bloc sommet 21 en attente dans l'anneau de transfert 41.

Le bâti de tambour 7 coulisse ensuite axialement le long du rail principal de guidage 42 pour quitter la zone de confection 2 et amener le tambour 6 et son bloc carcasse 3 ainsi conformé dans la zone d'assemblage 40 contiguë, jusqu'à faire pénétrer ledit tambour 6 et son bloc carcasse 3 à l'intérieur de l'anneau de transfert 41, à l'intérieur de l'élément annulaire que forme le bloc sommet 21 en attente.

En position ainsi insérée dans l'anneau de transfert 41, le bloc carcasse 3 et le bloc sommet 21, ainsi que de préférence l'anneau de transfert lui-même 41, sont coaxiaux. En outre, le bloc carcasse 3 et le bloc sommet 21 occupent alors axialement, le long du rail de guidage principal 42, une même plage d'abscisses, de sorte à se chevaucher axialement en coïncidence l'un avec l'autre, pour une parfaite superposition.

Le tambour 6 procède alors à une nouvelle expansion radiale du bloc carcasse 3 pour amener celui-ci au contact de la face intérieure du bloc sommet 21, de sorte que l'anneau de transfert 41 puisse poser et fixer ledit bloc sommet 21 sur ledit bloc carcasse 3 conformé.

Le bandage à architecture à carcasse radiale conventionnelle ainsi obtenu est ensuite dégagé du tambour 6, et ledit tambour 6 s'éloigne de la zone d'assemblage 40 pour venir se replacer dans la zone de confection 2, en vis-à-vis du premier système d'amenée 10, dans l'attente du début d'un prochain cycle.

Si le sélecteur 61 opte pour la fabrication d'un bandage à sommet polarisé, le procédé sera le suivant. Par économie de description, seuls seront détaillées les étapes ou sous-étapes qui diffèrent de celles mise en oeuvre pour la fabrication d'un bandage à architecture radiale conventionnelle.

La fabrication du bloc sommet 21 ne requiert cette fois pas de nappe sommet au sens indiqué ci-dessus, et se déroule selon l'étape (a) mentionnée plus haut.

A ce titre, la virole 23 se positionne successivement, dans la zone de finition 20, devant l'équipement de trancanage qui pose la frette sur la virole 23, par enroulement en spires d'une bande renforcée continue, puis devant le second système d'amenée 24, qui pose la bande de roulement 22 en anneau fermé sur la virole 23, par-dessus la frette.

Ce bloc sommet 21 spécifique est ensuite placé en attente dans l'anneau de transfert 41, au sein de la zone d'assemblage 40.

Pendant ce temps, dans la zone de confection 2, on prépare le bloc carcasse 3 comme suit, conformément à l'étape (b) mentionnée plus haut.

La sous-étape (b1) de réalisation du bloc carcasse 3, qui inclut ici la pose sur le tambour 6, par le premier système d'amenée 10, du complexe comprenant la gomme intérieure et les flancs extérieurs, puis la pose de la nappe carcasse 4, se déroule comme décrit plus haut.

Ensuite, on achemine et l'on pose, par-dessus ladite nappe carcasse 4, la nappe sommet 71, pour intégrer ladite nappe sommet 71 au bloc carcasse 3.

Au sein de la première variante de réalisation, il suffit de laisser le tambour 6 en attente dans la même position axiale que celle que ledit tambour 6 occupait pour recevoir la nappe carcasse 4, en vis-à-vis du premier système d'amenée 10, afin que le troisième système d'amenée 70, et plus particulièrement le second tapis de convoyage 73, procède à l'approvisionnement et à l'enroulement de la nappe sommet 71 sur ledit tambour 6, à ladite même position axiale, tel que cela est visible sur les figures 1 et 2.

Au sein de la seconde variante de réalisation, en revanche, après la pose de la nappe carcasse 4, le bâti de tambour 7 fait reculer axialement le tambour 6 le long du rail de guidage principal 42, en éloignement des zones d'assemblage 40 et de finition 20, pour venir placer le tambour 6 dans la position d'application P92_2, entre le premier système d'amenée 10 et le distributeur auxiliaire 90, tel que cela est visible sur les figures 4 et 5, de sorte que le rouleau applicateur 92 vienne poser par enroulement sur ledit tambour 6, autour de la nappe carcasse 3, la nappe sommet 71 en provenance de l'outil de coupe 84 du dispositif de préparation de nappe sommet 80.

Au sein de la troisième variante de réalisation, la nappe sommet 71 est initialement acheminée par le convoyeur d'alimentation 100 jusque dans la zone de finition 20, comme si ladite nappe sommet était destinée à intégrer le bloc sommet 21. Ladite nappe sommet 71 est toutefois interceptée par le dispositif de répartition 101, qui, placé dans la zone de prélèvement P102_1, prélève ladite nappe sommet 71 sur ledit convoyeur d'alimentation 100, dont le système d'aimantation aura été désactivé pour la circonstance, au moyen du rouleau intermédiaire 102 et redirige ladite nappe sommet 71 vers la zone de confection 2. A cet effet, le chariot 103 exécute un déplacement, le long du rail de guidage auxiliaire 104, qui permet d'extraire le rouleau intermédiaire 102 hors de la zone de finition 20, et de le transporter, avec la nappe sommet 71 qu'il embarque, au-delà de la zone d'assemblage 40, en contournant l'anneau de transfert 41, jusqu'à l'amener dans la zone de confection 2, entre le premier système d'amenée 10 et l'anneau de transfert 41, dans la position de déchargement P102_2 où ladite nappe sommet 71 est alors posée par enroulement sur le tambour 6.

Quelle que soit la variante de réalisation considérée, une fois que la nappe sommet 71 a été posée et fixée sur la nappe carcasse 4, le bâti de tambour 7 se positionne, le long du rail de guidage principal 42, dans la zone de confection 2, de sorte que le tambour 6, porteur du bloc carcasse 3, reçoive les tringles 11, 12, et plus particulièrement les « blocs-talons », que l'on enfile sur ledit tambour, de part et d'autre de la zone de recouvrement 53.

S'ensuit l'étape (b2) de conformation et de polarisation, au cours de laquelle l'expansion radiale du bloc carcasse 3, provoquée par le tambour 6, et telle que représentée sur la figure 16, transforme le bloc carcasse cylindrique 3 en bloc carcasse 3 conformé toroïdal, et, surtout, s'accompagne ici d'une polarisation, c'est-à-dire d'une rotation des renforts de nappe 5 par rapport à la direction circonférentielle C6, dans la zone de recouvrement 53.

Ce faisant, dans la zone de recouvrement 53, et comme illustré sur la figure 18, les renforts de carcasse 5 passent de la première orientation angulaire A5_1 à la troisième orientation angulaire A5_2, tandis que, simultanément, les renforts de polarisation 52, et plus particulièrement les renforts de nappe sommet 72 qui les constituent, passent de la seconde orientation angulaire A52_1 à une quatrième orientation angulaire A52_2 distincte de la seconde orientation angulaire A52_1.

Plus particulièrement, les renforts de carcasse 5 ainsi que les renforts de polarisation 52, 72, qui se croisent, peuvent avoir tendance, en opérant les uns par rapport aux autres des rotations de sens contraire, à se rabattre vers la direction circonférentielle C6 du tambour 6, de sorte que, en valeur absolue, la troisième orientation angulaire A5_2 des renforts de carcasse 5, finale, atteinte après conformation, et conservée dans le bandage définitif, est inférieure à la première orientation angulaire A5_1, tandis que, de manière analogue, la quatrième orientation angulaire A52_2, finale, des renforts de nappe sommet 72 est inférieure à la seconde orientation angulaire A52_1.

On obtient ainsi un bloc carcasse 3 à sommet polarisé, et plus particulièrement une nappe carcasse 4 polarisée, avec de préférence un ensemble nappe carcasse 4/nappe sommet 71 polarisé.

Dans le même temps, les renforts de carcasse 5 situés hors de la zone de recouvrement 53, dans les flancs qui se redressent sensiblement radialement, ici sensiblement verticalement, s'orientent selon des plans radiaux. La rotation de vrillage des extrémités du bloc carcasse 3 et des tringles 11, 12 correspondantes est avantageusement accommodée par la mobilité en rotation des berceaux supportant lesdites tringles.

Le bâti de tambour 7 est ensuite déplacé le long du rail de guidage principal 42, en direction de la zone d'assemblage 40, jusqu'à ce que le tambour 6 et son bloc carcasse 3, conformé et polarisé, s'insèrent dans l'anneau de transfert 41, dans ladite zone d'assemblage 40, de façon coaxiale et en vis-à-vis axialement du bloc sommet 21 en attente.

Comme indiqué précédemment, on pourra ici encore rétracter légèrement le bloc carcasse 3 pour pouvoir engager ledit bloc carcasse 3 sans interférence, mais toujours sous une forme toroïdale, à l'intérieur de l'anneau formé par le bloc sommet 21, puis de nouveau déployer radialement ledit bloc carcasse 3 afin de l'amener au contact de la face cylindrique radialement interne du bloc sommet 21, et ainsi permettre à l'anneau de transfert 41 de fixer ledit bloc sommet 21 sur ledit bloc carcasse 3, tel que cela est illustré sur la figure 17.

Une fois le bandage ainsi constitué extrait du tambour 6, ledit tambour 6 s'éloigne de la zone d'assemblage 40 et de la zone de finition 20, dans la direction opposée à la virole 23, et regagne sa position initiale, dans la zone de confection 2, de préférence en vis-à-vis axialement du premier système d'amenée 10, où ledit tambour 6 se tient prêt à recevoir un nouveau complexe et une nouvelle nappe carcasse 4.

## Revendications

1. Machine (1) pour la fabrication automatique d'un bandage, ladite machine comprenant :
- une première zone (2) dite « zone de confection » (2), agencée pour réaliser un premier bloc (3) annulaire constitutif du bandage, dit « bloc carcasse » (3), qui comprend au moins une nappe carcasse (4) pourvue d'un premier jeu d'éléments filaires de renfort (5), dit « renforts de carcasse » (5), ladite zone de confection (2) comprenant à cet effet un tambour (6) de confection, qui présente un axe central (X6) de tambour et qui est monté en rotation autour dudit axe central (X6) de tambour, ainsi qu'un premier système d'amenée (10) qui est agencé pour venir poser la nappe carcasse (4) sur le tambour de confection (6) par enroulement sur ledit tambour de confection, autour de l'axe central (X6) du tambour, de manière à ce que les renforts de carcasse (5) présentent, par rapport à une direction circonférentielle (C6) du tambour, une première orientation angulaire (A5_1),
- une seconde zone (20) dite « zone de finition » (20), agencée pour réaliser un second bloc (21) annulaire constitutif du bandage, dit « bloc sommet » (21), qui comprend au moins une bande de roulement (22), ladite zone de finition (20) comprenant à cet effet une virole (23) montée en rotation autour d'un axe central (X23) de virole, ainsi qu'un second système d'amenée (24) permettant de poser la bande de roulement (22) par enroulement sur la virole (23), autour de l'axe central (X23) de virole,
- un système de conformation (30), agencé pour réaliser une opération de conformation qui provoque une expansion radiale du bloc carcasse (3) présent sur le tambour de confection (6), afin d'obtenir un bloc carcasse conformé de forme toroïdale,
- une troisième zone (40) dite « zone d'assemblage » (40), agencée pour assembler le bloc sommet (21) de manière concentrique sur le bloc carcasse (3) conformé afin d'obtenir un bandage, ladite zone d'assemblage (40) comprenant à cet effet un dispositif de transfert (41), du genre anneau de transfert (41), qui est agencé pour recevoir le bloc sommet (21) en provenance de la virole (23) de la zone de finition (20) et pour transférer ledit bloc sommet (21) sur et autour du bloc carcasse (3) conformé,
- un système de polarisation (50) qui est agencé pour amener au contact du bloc carcasse (3), avant l'opération de conformation, une structure annulaire dite « structure de polarisation » (51), qui est centrée sur l'axe central du tambour (X6) et pourvue d'un second jeu d'éléments filaires de renfort, dits « renforts de polarisation » (52), qui présentent par rapport à la direction circonférentielle du tambour (C6) une seconde orientation angulaire (A52_1), qui est différente de la première orientation angulaire (A5_1) des renforts de carcasse (5), ladite structure de polarisation (51) s'étendant de sorte à chevaucher partiellement la nappe carcasse (4) le long de l'axe central du tambour (X6), selon une zone dite « zone de recouvrement » (53), si bien que lors de l'opération de conformation, les renforts de polarisation (52) interagissent avec les renforts de carcasse (5) afin de modifier, dans la zone de recouvrement (53), l'orientation angulaire desdits renforts de carcasse (5) par rapport à la direction circonférentielle du tambour (C6), et que l'on obtient ainsi un bloc carcasse (3) conformé et polarisé,
- une unité de commande (60) automatique, qui comprend au moins un programme permettant de faire exécuter automatiquement à la machine un cycle, dit « cycle de fabrication de bandage à sommet polarisé », qui comprend une étape (a) de réalisation d'un bloc sommet (21) dans la zone de finition (20), une étape (b) de préparation d'un bloc carcasse (3) conformé et polarisé qui comprend une sous-étape (b1) de réalisation d'un bloc carcasse (3) dans la zone de confection (2) puis une sous-étape (b2) de conformation et de polarisation au cours de laquelle on conforme et l'on polarise ledit bloc carcasse (3) en provenance de la zone de confection (2) pour obtenir un bloc carcasse conformé et polarisé, ledit cycle prévoyant que l'étape (a) de réalisation du bloc sommet (21) se chevauche temporellement au moins en partie avec l'étape (b) de préparation du bloc carcasse (3), de sorte qu'une partie au moins de la réalisation du bloc sommet (21) s'opère en temps masqué par rapport à la préparation du bloc carcasse (3), puis enfin une étape (c) d'assemblage au cours de laquelle, dans la zone d'assemblage (40), le dispositif de transfert (41) place et fixe le bloc sommet (21) sur le bloc carcasse (3) conformé et polarisé, de manière à obtenir un bandage.

2. Machine selon la revendication 1 **caractérisée en ce que** le tambour de confection (6), le dispositif de transfert (41), et la virole (23) sont alignés dans cet ordre selon un même rail de guidage principal (42), de préférence rectiligne, de sorte que la virole (23) peut aller et venir le long dudit rail de guidage principal (42) depuis la zone de finition (20) jusqu'à la zone d'assemblage (40) pour déposer le bloc sommet (21) dans le dispositif de transfert (41), tandis que le tambour (6) de confection peut aller et venir depuis la zone de confection (2) jusqu'à la zone d'assemblage (40) pour présenter le bloc carcasse (3) conformé dans le dispositif de transfert (41), en vis-à-vis, axialement, du bloc sommet (21) contenu dans ledit dispositif de transfert (41).

3. Machine selon la revendication 1 ou 2 **caractérisée en ce qu'**elle comprend un troisième système d'amenée (70) qui est agencé pour amener une nappe dite « nappe sommet » (71), destinée à intégrer le bandage entre la nappe carcasse (4) et la bande de roulement (22) pour renforcer ledit bandage, ladite nappe sommet (71) comprenant à cet effet une couche de matériau élastomérique qui s'étend selon une direction longitudinale (L71), depuis une extrémité de tête (71F) jusqu'à une extrémité de queue (71R), et au sein de laquelle se trouvent des éléments filaires de renfort (72), dits « renforts de nappe sommet » (72), qui sont disposés parallèlement les uns aux autres selon un angle dit « angle de nappe sommet » prédéterminé par rapport à la direction longitudinale (L71).

4. Machine selon la revendication 3 **caractérisée en ce que** le système de polarisation (50) utilise la nappe sommet (71) comme structure de polarisation, de sorte que les renforts de nappe sommet (72) forment les renforts de polarisation (52), et **en ce que** le troisième système d'amenée (70) est agencé à cet effet pour amener la nappe sommet (71) dans la zone de confection (2) et enrouler ladite nappe sommet (71) sur le tambour de confection (6) jusqu'à refermer l'extrémité de queue (71R) de ladite nappe sommet sur l'extrémité de tête (71F), de manière à intégrer ladite nappe sommet (71) au bloc carcasse (3), avant l'opération de conformation.

5. Machine selon la revendication 3 ou 4 **caractérisée en ce que** le troisième système d'amenée (70) comprend d'une part un convoyeur d'alimentation (100), qui amène la nappe sommet (71) dans la zone de finition (20), et d'autre part un dispositif de répartition (101) qui est agencé pour venir prélever la nappe sommet (71), acheminée par le convoyeur d'alimentation (100), dans la zone de finition (20), puis pour transporter ladite nappe sommet (71) jusqu'au tambour de confection (6), dans la zone de confection (2), en contournant la zone d'assemblage (40) et son dispositif de transfert (41).

6. Machine selon la revendication 5 **caractérisée en ce que** le convoyeur d'alimentation (100) du troisième système d'amenée (70) est agencé de manière à pouvoir coopérer sélectivement soit avec la virole (23), dans la zone de finition (20), de manière à poser et enrouler la nappe sommet (71) sur la virole (23) et ainsi intégrer ladite nappe sommet (71) au bloc sommet (21) avant que ledit bloc sommet (21) ne soit transféré et posé par le dispositif de transfert (41) sur le bloc carcasse (3) conformé, soit avec un rouleau intermédiaire (102) qui appartient au dispositif de répartition (101) et qui est monté mobile entre d'une part une position de prélèvement (P102_1), qui est située dans la zone de finition (20) et dans laquelle ledit rouleau intermédiaire (102) vient prélever la nappe sommet (71) sur le convoyeur d'alimentation (100), et d'autre part une position de déchargement (P102_2) qui est située dans la zone de confection (2) et dans laquelle ledit rouleau intermédiaire (102) vient appliquer la nappe sommet (71) sur le tambour de confection (6) pour intégrer ladite nappe sommet (71) au bloc carcasse (3) avant l'opération de conformation.

7. Machine selon l'une des revendications précédentes **caractérisée en ce que** le système de polarisation (50) utilise comme structure de polarisation (51) un manchon polarisant, qui contient les renforts de polarisation (52) et qui fait partie intégrante du tambour de confection (6) sur lequel on vient poser la nappe carcasse (4), de sorte que ledit manchon polarisant puisse faire office de structure de polarisation (51) réutilisable, qui vient temporairement interagir avec le bloc carcasse (3) lorsque l'on procède à une expansion radiale du tambour de confection (6) pour réaliser l'opération de conformation, puis qui se trouve séparée du bandage lorsque l'on retire ledit bandage du tambour de confection (6).

8. Machine selon l'une des revendications précédentes **caractérisée en ce que** l'unité de commande (60) est associée à un sélecteur (61) qui permet soit d'activer, soit de désactiver le système de polarisation (50), de sorte que l'unité de commande (60) puisse faire exécuter à la machine (1) respectivement soit un cycle de fabrication de bandage à sommet polarisé, au cours duquel on associe une structure de polarisation (51) au bloc carcasse (3) de sorte à modifier l'orientation des renforts de carcasse (5) dans la zone de recouvrement (53) lors de l'opération de conformation, soit un cycle de fabrication d'un bandage dit « à architecture radiale conventionnelle », au sein duquel on réalise l'opération de conformation sans avoir associé de structure de polarisation (51) au bloc carcasse (3).

## Patentansprüche

1. Maschine (1) zur automatischen Herstellung einer Bandage, wobei die Maschine Folgendes umfasst:
- einen als "Konfektionsbereich" (2) bezeichneten ersten Bereich (2), der dazu angeordnet ist, einen als "Karkassenblock" (3) bezeichneten ersten ringförmigen konstitutiven Block (3) der Bandage herzustellen, der mindestens eine Karkassenlage (4) umfasst, die mit einem ersten Satz von als "Karkassenverstärkungen" (5) bezeichneten drahtförmigen Verstärkungselementen (5) versehen ist, wobei der Konfektionsbereich (2) zu diesem Zweck Folgendes umfasst: eine Konfektionstrommel (6), die eine zentrale Trommelachse (X6) aufweist und die um die zentrale Trommelachse (X6) drehbar montiert ist, und ein erstes Zufuhrsystem (10), das dazu angeordnet ist, die Karkassenlage (4) auf die Konfektionstrommel zu legen, indem sie um die zentrale Trommelachse (X6) auf die Konfektionstrommel (6) gewickelt wird, sodass die Karkassenverstärkungen (5) in Bezug auf eine Umfangsrichtung (C6) der Trommel eine erste Winkelausrichtung (A5_1) aufweisen,
- einen als "Endbearbeitungsbereich" (20) bezeichneten zweiten Bereich (20), der dazu angeordnet ist, einen als "Scheitelblock" (21) bezeichneten zweiten ringförmigen konstitutiven Block (21) der Bandage zu bilden, der mindestens einen Laufstreifen (22) umfasst, wobei der Endbearbeitungsbereich (20) zu diesem Zweck Folgendes umfasst: einen Ring (23), der um eine zentrale Ringachse (X23) drehbar montiert ist, und ein zweites Zufuhrsystem (24), das es ermöglicht, den Laufstreifen (22) auf den Ring (23) zu legen, indem er um die zentrale Ringachse (X23) gewickelt wird,
- ein Formgebungssystem (30), das dazu angeordnet ist, einen Formgebungsvorgang durchzuführen, der eine radiale Ausdehnung des auf der Konfektionstrommel (6) vorhandenen Karkassenblocks (3) bewirkt, um einen geformten Karkassenblock mit toroidaler Form zu erhalten,
- einen als "Verbindungsbereich" (40) bezeichneten dritten Bereich (40), der dazu angeordnet ist, den Scheitelblock (21) konzentrisch mit dem geformten Karkassenblock (3) zu verbinden, um eine Bandage zu erhalten, wobei der Verbindungsbereich (40) zu diesem Zweck eine Übertragungsvorrichtung (41) von der Art eines Übertragungsrings (41) umfasst, die dazu angeordnet ist, den vom Ring (23) aus dem Endbearbeitungsbereich (20) kommenden Scheitelblock (21) aufzunehmen und den Scheitelblock (21) auf den geformten Karkassenblock (3) und um diesen herum zu übertragen,
- ein Polarisationssystem (50), das dazu angeordnet ist, mit dem Karkassenblock (3) vor dem Formgebungsvorgang eine als "Polarisationsstruktur" (51) bezeichnete ringförmige Struktur in Kontakt zu bringen, die auf der zentralen Trommelachse (X6) zentriert und mit einem zweiten Satz von als "Polarisationsverstärkungen" (52) bezeichneten drahtförmigen Verstärkungselementen versehen ist, die in Bezug auf die Umfangsrichtung der Trommel (C6) eine von der ersten Winkelausrichtung (A5_1) der Karkassenverstärkungen (5) verschiedene zweite Winkelausrichtung (A52_l) aufweisen, wobei sich die Polarisationsstruktur (51) so erstreckt, dass sie die Karkassenlage (4) entlang der zentralen Trommelachse (X6) gemäß einem als "Überlappungsbereich" (53) bezeichneten Bereich teilweise überlappt, so dass während des Formgebungsvorgangs die Polarisationsverstärkungen (52) mit den Karkassenverstärkungen (5) zusammenwirken, um im Überlappungsbereich (53) die Winkelausrichtung der Karkassenverstärkungen (5) in Bezug auf die Umfangsrichtung (C6) der Trommel zu verändern, und dass so ein geformter und polarisierter Karkassenblock (3) erhalten wird,
- eine automatische Steuereinheit (60), die mindestens ein Programm umfasst, das es ermöglicht, die Maschine dazu zu veranlassen, automatisch einen als "Zyklus zur Herstellung einer Bandage mit polarisiertem Scheitel" bezeichneten Zyklus auszuführen, der Folgendes umfasst: einen Schritt (a) der Herstellung eines Scheitelblocks (21) im Endbearbeitungsbereich (20), einen Schritt (b) der Herstellung eines geformten und polarisierten Karkassenblocks (3), der einen Unterschritt (b1) der Herstellung eines Karkassenblocks (3) im Konfektionsbereich (2) und einen anschließenden Formgebungs- und Polarisationsunterschritt (b2), bei dem der aus dem Konfektionsbereich (2) kommende Karkassenblock (3) geformt und polarisiert wird, um einen geformten und polarisierten Karkassenblock zu erhalten, umfasst, wobei der Zyklus vorsieht, dass sich der Schritt (a) der Herstellung des Scheitelblocks (21) zeitlich zumindest teilweise mit dem Schritt (b) der Herstellung des Karkassenblocks (3) überschneidet, sodass zumindest ein Teil der Herstellung des Scheitelblocks (21) im Hintergrund der Herstellung des Karkassenblocks (3) erfolgt, und schließlich einen Verbindungsschritt (c), bei dem im Verbindungsbereich (40) die Übertragungsvorrichtung (41) den Scheitelblock (21) auf dem geformten und polarisierten Karkassenblock (3) anordnet und befestigt, um eine Bandage zu erhalten.

2. Maschine nach Anspruch 1, **dadurch gekennzeichnet, dass** die Konfektionstrommel (6), die Übertragungsvorrichtung (41) und der Ring (23) in dieser Reihenfolge entlang einer gleichen, vorzugsweise geradlinigen Hauptführungsschiene (42) ausgerichtet sind, sodass sich der Ring (23) entlang der Hauptführungsschiene (42) vom Endbearbeitungsbereich (20) bis zum Verbindungsbereich (40) hin- und herbewegen kann, um den Scheitelblock (21) in der Übertragungsvorrichtung (41) abzulegen, während sich die Konfektionstrommel (6) vom Konfektionsbereich (2) bis zum Verbindungsbereich (40) hin- und herbewegen kann, um den in der Übertragungsvorrichtung (41) geformten Karkassenblock (3) axial gegenüber dem in der Übertragungsvorrichtung (41) enthaltenen Scheitelblock (21) zu präsentieren.

3. Maschine nach Anspruch 1 oder 2, **dadurch gekennzeichnet, dass** sie ein drittes Zufuhrsystem (70) umfasst, das dazu angeordnet ist, eine als "Scheitellage" (71) bezeichnete Lage zuzuführen, die dazu bestimmt ist, die Bandage zwischen die Karkassenlage (4) und den Laufstreifen (22) einzufügen, um die Bandage zu verstärken, wobei die Scheitellage (71) zu diesem Zweck eine Schicht aus elastomerem Material umfasst, die sich in einer Längsrichtung (L71) von einem vorderen Ende (71F) zu einem hinteren Ende (71R) erstreckt und in der sich als "Scheitellagenverstärkungen" (72) bezeichnete drahtförmige Verstärkungselemente (72) befinden, die parallel zueinander in einem als "Scheitellagenwinkel" bezeichneten vorbestimmten Winkel in Bezug auf die Längsrichtung (L71) angeordnet sind.

4. Maschine nach Anspruch 3, **dadurch gekennzeichnet, dass** das Polarisationssystem (50) die Scheitellage (71) als Polarisationsstruktur nutzt, sodass die Scheitellagenverstärkungen (72) die Polarisationsverstärkungen (52) bilden, und dass das dritte Zufuhrsystem (70) zu diesem Zweck so angeordnet ist, dass es die Scheitellage (71) in den Konfektionsbereich (2) bringt und die Scheitellage (71) auf die Konfektionstrommel (6) wickelt, bis das hintere Ende (71R) der Scheitellage auf dem vorderen Ende (71F) geschlossen ist, um die Scheitellage (71) vor dem Formgebungsvorgang in den Karkassenblock (3) zu integrieren.

5. Maschine nach Anspruch 3 oder 4, **dadurch gekennzeichnet, dass** das dritte Zufuhrsystem (70) einerseits einen Zufuhrförderer (100) umfasst, der die Scheitellage (71) in den Endbearbeitungsbereich (20) bringt, und andererseits eine Verteilvorrichtung (101) umfasst, die dazu angeordnet ist, die durch den Zufuhrförderer (100) beförderte Scheitellage (71) aufzunehmen und anschließend die Scheitellage (71) unter Umgehung des Verbindungsbereichs (40) und seiner Übertragungsvorrichtung (41) zur Konfektionstrommel (6) in den Konfektionsbereich (2) zu transportieren.

6. Maschine nach Anspruch 5, **dadurch gekennzeichnet, dass** der Zufuhrförderer (100) des dritten Zufuhrsystems (70) so angeordnet ist, dass er selektiv entweder mit dem Ring (23) im Endbearbeitungsbereich (20) zusammenwirken kann, um die Scheitellage (71) auf den Ring (23) zu legen und zu wickeln und so die Scheitellage (71) in den Scheitelblock (21) zu integrieren, bevor der Scheitelblock (21) durch die Übertragungsvorrichtung (41) auf den geformten Karkassenblock (3) übertragen und darauf abgelegt wird, oder mit einer Zwischenrolle (102) zusammenzuwirken, die zur Verteilvorrichtung (101) gehört und beweglich montiert ist zwischen einer Entnahmeposition (P102_1) auf der einen Seite, die sich im Endbearbeitungsbereich (20) befindet und in der die Zwischenrolle (102) die Scheitellage (71) auf dem Zufuhrförderer (100) aufnimmt, und einer Entladeposition (P102_2) auf der anderen Seite, die sich im Konfektionsbereich (2) befindet und in der die Zwischenrolle (102) die Scheitellage (71) auf die Konfektionstrommel (6) aufbringt, um die Scheitellage (71) vor dem Formgebungsvorgang in den Karkassenblock (3) zu integrieren.

7. Maschine nach einem der vorangehenden Ansprüche, **dadurch gekennzeichnet, dass** das Polarisationssystem (50) als Polarisationsstruktur (51) eine Polarisationshülse verwendet, die die Polarisationsverstärkungen (52) enthält und integraler Bestandteil der Konfektionstrommel (6) ist, auf die die Karkassenlage (4) gelegt wird, sodass die Polarisationshülse als wiederverwendbare Polarisationsstruktur (51) dienen kann, die vorübergehend mit dem Karkassenblock (3) zusammenwirkt, wenn eine radiale Ausdehnung der Konfektionstrommel (6) vorgenommen wird, um den Formgebungsvorgang durchzuführen, und die dann von der Bandage getrennt wird, wenn die Bandage von der Konfektionstrommel (6) abgenommen wird.

8. Maschine nach einem der vorangehenden Ansprüche, **dadurch gekennzeichnet, dass** die Steuereinheit (60) mit einem Wahlschalter (61) verbunden ist, der es ermöglicht, das Polarisationssystem (50) zu aktivieren oder zu deaktivieren, sodass die Steuereinheit (60) die Maschine (1) dazu veranlassen kann, einen Zyklus zur Herstellung einer Bandage mit polarisiertem Scheitel auszuführen, bei dem eine Polarisationsstruktur (51) mit dem Karkassenblock (3) verbunden wird, um die Ausrichtung der Karkassenverstärkungen (5) im Überlappungsbereich (53) während des Formgebungsvorgangs zu verändern, bzw. einen Zyklus zur Herstellung einer Bandage mit sogenannter "konventioneller radialer Architektur" auszuführen, bei dem der Formgebungsvorgang durchgeführt wird, ohne eine Polarisationsstruktur (51) mit dem Karkassenblock (3) verbunden zu haben.

## Claims

1. Machine (1) for the automatic manufacture of a tyre, said machine comprising:
- a first zone (2) referred to as "tyre-building zone" (2), designed to produce a first annular entity (3) that forms part of the tyre, known as the "carcass entity" (3), which comprises at least one carcass ply (4) provided with a first set of filamentary reinforcing elements (5) referred to as "carcass reinforcers" (5), said tyre-building zone (2) for this purpose comprising a tyre-building drum (6) which has a drum central axis (X6) and which is mounted to rotate about said drum central axis (X6), and a first conveying system (10) which is designed to lay the carcass ply (4) on the tyre-building drum (6) by winding it over said tyre-building drum about the drum central axis (X6) so that the carcass reinforcers (5) exhibit, with respect to a circumferential direction (C6) of the drum, a first angular orientation (A5_1),
- a second zone (20) referred to as the "finishing zone" (20), designed to produce a second annular entity (21) that forms part of the tyre, known as the "crown entity" (21), which comprises at least a tread (22), said finishing zone (20) for this purpose comprising a shell ring (23) mounted to rotate about a shell-ring central axis (X23), and a second conveying system (24) for laying the tread (22) by winding on the shell ring (23) about the shell-ring central axis (X23),
- a shaping system (30) designed to perform a shaping operation which causes the carcass entity (3) present on the tyre-building drum (6) to expand radially in order to obtain a shaped carcass entity of toroidal shape,
- a third zone (40) referred to as the "assembling zone" (40), designed to assemble the crown entity (21) concentrically on the shaped carcass entity (3) so as to obtain a tyre, said assembling zone (40) for this purpose comprising a transfer device (41) of the transfer-ring type (41), which is designed to receive the crown entity (21) coming from the shell ring (23) of the finishing zone (20) and transfer said crown entity (21) onto and around the shaped carcass entity (3),
- a biasing system (50) which is designed to bring into contact with the carcass entity (3), prior to the shaping operation, an annular structure referred to as a "biasing structure" (51), which is centred on the drum central axis (X6) and provided with a second set of filamentary reinforcing elements referred to as "biasing reinforcers" (52) which exhibit, with respect to the circumferential direction (C6) of the drum, a second angular orientation (A52_1), which is different from the first angular orientation (A5_1) of the carcass reinforcers (5), said biasing structure (51) extending in such a way as to partially straddle the carcass ply (4) along the drum central axis (X6) in a zone referred to as the "zone of overlap" (53) so that during the shaping operation, the biasing reinforcers (52) interact with the carcass reinforcers (5) so as to modify, in the zone of overlap (53), the angular orientation of said carcass reinforcers (5) with respect to the circumferential direction (C6) of the drum and so that in this way there is obtained a shaped and biased carcass entity (3),
- an automatic control unit (60) which comprises at least a program enabling automatic execution by the machine of a cycle known as a "biased-crown tyre manufacturing cycle" which comprises a step (a) of producing a crown entity (21) in the finishing zone (20), a step (b) of preparing a shaped and biased carcass entity (3) which step comprises a sub-step (b1) of creating a carcass entity (3) in the tyre-building zone (2) and then a shaping and biasing sub-step (b2) during which said carcass entity (3) coming from the tyre-building zone (2) is shaped and biased in order to obtain a shaped and biased carcass entity, said cycle making provision for the step (a) of producing the crown entity (21) to overlap in time with at least part of the step (b) of preparing the carcass entity (3) so that at least part of the production of the crown entity (21) is performed in parallel with the preparation of the carcass entity (3), and then finally an assembling step (c) during which, in the assembling zone (40), the transfer device (41) places and fixes the crown entity (21) on the shaped and biased carcass entity (3) so as to obtain a tyre.

2. Machine according to Claim 1, **characterized in that** the tyre-building drum (6), the transfer device (41) and the shell ring (23) are aligned in this order along the one same, preferably rectilinear, main guide rail (42) so that the shell ring (23) can move back and forth along said main guide rail (42) from the finishing zone (20) as far as the assembling zone (40) in order to set down the crown entity (21) in the transfer device (41), whereas the tyre-building drum (6) can move back and forth from the tyre-building zone (2) as far as the assembling zone (40) to present the shaped carcass entity (3), in the transfer device (41), to axially face the crown entity (21) contained in said transfer device (41).

3. Machine according to Claim 1 or 2, **characterized in that** it comprises a third conveying system (70) designed to convey a ply referred to as "crown ply" (71), intended to integrate the tyre between the carcass ply (4) and the tread (22) so as to reinforce said tyre, said crown ply (71) for this purpose comprising a layer of elastomeric material which extends in a longitudinal direction (L71), from a head end (71F) as far as a tail end (71R), and within which there are filamentary reinforcing elements (72) referred to as "crown ply reinforcers" (72) which are arranged parallel to one another at a predetermined angle referred to as the "crown ply angle" with respect to the longitudinal direction (L71).

4. Machine according to Claim 3, **characterized in that** the biasing system (50) uses the crown ply (71) as a biasing structure so that the crown ply reinforcers (72) form the biasing reinforcers (52), and **in that** the third conveying system (70) is for this purpose designed to convey the crown ply (71) into the tyre-building zone (2) and to wind said crown ply (71) onto the tyre-building drum (6) until the tail end (71R) of said crown ply closes onto the head end (71F) so as to integrate said crown ply (71) into the carcass entity (3) prior to the shaping operation.

5. Machine according to Claim 3 or 4, **characterized in that** the third conveying system (70) comprises, on the one hand, a feed conveyor (100) which conveys the crown ply (71) into the finishing zone (20), and, on the other hand, a distribution device (101) which is designed to pick up the crown ply (71) conveyed by the feed conveyor (100) in the finishing zone (20) and then transport said crown ply (71) as far as the tyre-building drum (6) in the tyre-building zone (2), bypassing the assembling zone (40) and the transfer device (41) thereof.

6. Machine according to Claim 5, **characterized in that** the feed conveyor (100) of the third conveying system (70) is designed to be able to collaborate selectively either with the shell ring (23), in the finishing zone (20), so as to set down and wind the crown ply (71) on the shell ring (23) and thus integrate said crown ply (71) into the crown entity (21) before said crown entity (21) is transferred and set down by the transfer device (41) on the shaped carcass entity (3), or with an intermediate roller (102) which belongs to the distribution device (101) and which is mounted with the ability to move between, on the one hand, a pickup position (P102_1), which is situated in the finishing zone (20) and in which said intermediate roller (102) picks up the crown ply (71) from the feed conveyor (100), and, on the other hand, an off-loading position (P102_2) which is situated in the tyre-building zone (2) and in which said intermediate roller (102) applies the crown ply (71) to the tyre-building drum (6) to integrate said crown ply (71) into the carcass entity (3) before the shaping operation.

7. Machine according to one of the preceding claims, **characterized in that** the biasing system (50) uses, as biasing structure (51), a biasing sleeve which contains the biasing reinforcers (52) and which forms an integral part of the tyre-building drum (6) on which the carcass ply (4) is set down so that said biasing sleeve can act as a reusable biasing structure (51) which interacts temporarily with the carcass entity (3) when the tyre-building drum (6) is being radially expanded in order to perform the shaping operation, and is then separated from the tyre when said tyre is removed from the tyre-building drum (6).

8. Machine according to any one of the preceding claims, **characterized in that** the control unit (60) is associated with a selector (61) making it possible either to activate or to deactivate the biasing system (50) so that the control unit (60) can make the machine (1) execute respectively either a biased-crown tyre manufacturing cycle, during which a biasing structure (51) is associated with the carcass entity (3) so as to modify the orientation of the carcass reinforcers (5) in the zone of overlap (53) during the shaping operation, or a so-called "conventional radial architecture" tyre manufacturing cycle during which the shaping operation is performed without a biasing structure (51) having been associated with the carcass entity (3).
